# EUROPÄISCHE PATENTSCHRIFT

(11) **EP 2 397 960 B1**
(45) Veröffentlichungstag und Bekanntmachung des Hinweises auf die Patenterteilung: **08.08.2018**
(21) Anmeldenummer: 11170292.4
(22) Anmeldetag: 17.06.2011
(51) Int. Cl.: G06F 21/00, G06F 21/35, G06F 21/43, G06F 21/62, H04L 29/06, H04W 12/06, H04W 4/60

(54) **Verfahren zum Lesen von Attributen aus einem ID-Token über eine Telekommunikations-Chipkarte und ein Server-Computersystem**
Method for reading attributes from an ID token via a telecommunications chip card and a server computer system
Procédé de lecture d'attributs d'un jeton d'identification sur une carte à puce de télécommunications et un système d'ordinateur-serveur

(30) Priorität: 21.06.2010 DE 102010030311
(43) Veröffentlichungstag der Anmeldung: 21.12.2011
(73) Patentinhaber: Bundesdruckerei GmbH, 10958 Berlin (DE); Vodafone D2 GmbH, 40547 Düsseldorf (DE)
(72) Erfinder: Byszio-Wegener, Frank, 16348 Wandlitz (DE); Hengels, Erik, 41352 Korschenbroich (DE)
(74) Vertreter: Richardt Patentanwälte PartG mbB

(56) Entgegenhaltungen:
- EP-A1- 2 177 922
- WO-A2-02/50781
- DE-A1-102005 038 361
- DE-A1-102008 040 416
- "Advanced Security Mechanisms for Machine Readable Travel Documents Extended Access Control (EAC), Password Authenticated Connection Establishment (PACE), and Restricted Identification (RI)", ADVANCED SECURITY MECHANISMS FOR MACHINE READABLE TRAVEL DOCUMENTS, BUNDESAMT FÜR SICHERHEIT IN DER INFORMATIONSTECHNIK, DE, Nr. Version 2.0, 27. Oktober 2008 (2008-10-27), Seiten 1-99, XP007914803,

## Beschreibung

Die Erfindung betrifft ein Verfahren zum Lesen von zumindest einem Attribut aus einem ID-Token, ein Computerprogrammprodukt, einen ID-Token, eine Telekommunikations-Chipkarte, ein Computersystem sowie ein Server-Computersystem.

Aus dem Stand der Technik sind verschiedene Verfahren zur Verwaltung der so genannten digitalen Identität eines Benutzers bekannt:
Microsoft Windows CardSpace ist ein Client-basiertes digitales Identitätssystem, welches es Internetbenutzern ermöglichen soll, deren digitale Identität gegenüber Online-Diensten mitzuteilen. Nachteilig ist hierbei unter anderem, dass der Nutzer seine digitale Identität unter Umständen manipulieren kann.

Bei OPENID handelt es sich dagegen um ein Server-basiertes System. Ein so genannter Identity-Server speichert eine Datenbank mit den digitalen Identitäten der registrierten Nutzer. Nachteilig ist hieran unter anderem ein mangelhafter Datenschutz, da die digitalen Identitäten der Nutzer zentral gespeichert werden und das Nutzerverhalten aufgezeichnet werden kann.

Aus US 2007/0294431 A1 ist ein weiteres Verfahren zur Verwaltung der digitalen Identitäten bekannt, welches ebenfalls eine Nutzerregistrierung erfordert.

Ferner sind Token-basierte Authentifizierungsverfahren beispielsweise aus US 2001/0045451 A1 und US 6 257 486 B1 bekannt

Weitere Token-basierte Authentifizierungsverfahren sind in den zum Anmeldezeitpunkt unveröffentlichten Patentanmeldungen DE 10 2008 000 067.1-31, DE 10 2008 040 416.0-31 und DE 10 2008 042 262.2-31 derselben Patentanmelderin offenbart.

Die DE 102008040416 A1 beschreibt ein Verfahren zum Lesen von zumindest einem in einem ID-Token gespeicherten Attribut. Dabei authentifiziert sich der Nutzer und das erste Computersystem gegenüber dem ID-Token. Nach erfolgreicher Authentifizierung beider gegenüber dem ID-Token greift das erste Computersystem lesend auf das zumindest eine Attribut zu um dieses nach dessen Signierung an ein zweites Computersystem zu übertragen. Das Verfahren beinhaltet nicht eine Verwendung einer Telekommunikations-Chipkarte.

Die WO 02/50781 beschreibt ein Verfahren zur Überprüfung von Ausweisen. Die Ausweise sind Ausweiskarten mit maschinenlesbaren Daten. Die Daten werden zunächst mittels einer Leseeinrichtung gelesen und die Karte auf Echtheit überprüft.

Dann werden zumindest ein Teil der Daten und/oder daraus ermittelte Daten an ein mit der Leseeinrichtung verbundenes mobiles Endgerät übermittelt, welches unter Nutzung eines Datenübertragungsdienstes eines Kommunikationsnetzes, zu welchem das mobile Endgerät Zugang hat, entsprechende Daten an eine zentrale Datenverarbeitungseinrichtung übersendet. Dort werden unter Nutzung der übermittelten Daten personenbezogene Daten des registrierten Inhabers der Ausweiskarte ermittelt und zumindest ein Teil derselben über den Datenübertragungskanal an das mobile Endgerät gesendet.

Die Patentanmeldung EP 2177922 A1 betrifft ein Verfahren zum Testen eines elektronischen Ausweises. Das Verfahren beinhaltet die Benutzung eines NFC Mobiltelefons im Lesemodus, das Senden einer Datensequenz mit dem Mobiltelefon von dem NFC Mobiltelefon an den elektronischen Ausweis, wobei das Mobiltelefon und der elektronische Ausweis in räumlicher Nähe zueinander gebracht werden. Nachdem das NFC Mobiltelefon eine Antwort von dem elektronischen Ausweis erhalten hat sendet das Telefon ein Signal an den Nutzer dass der Test erfolgreich war.

Die DE 102005038361 A1 offenbart ein Verfahren zur Überprüfung des physischen Vorhandenseins einer amtlichen Erlaubnis eines Fahrzeuges. Ein automatisches Lesegerät wird eine Person vorgehalten, deren Besitz einer Erlaubnis überprüft werden soll. Die Erlaubnis kann beispielsweise in Form eines Dokumentes mit einem Sicherheitsmerkmal, zum Beispiel einem Hologramm, ausgebildet sein.

Aus der noch nicht veröffentlichten deutschen Patentanmeldung 102009001959.6-31 ist ein Verfahren zum Lesen von Attributen aus einem ID-Token über eine Mobilfunkverbindung bekannt. In dieser Patentanmeldung ist beschrieben, dass insbesondere ein oder mehrere Schnittstellen für die Nahfeldkommunikation zum Datenaustausch zwischen einem Mobilfunkgerät und einem ID-Token verwendet werden. Die Nahfeldkommunikation kann dabei insbesondere nach einem "Near Field Communication Standard" (NFC) und/oder nachdem Standard ISO/IEC 14443 erfolgen. Ein erstes Computersystem, zum Beispiel ein ID-Service Provider, liest über eine geschützte Kommunikationsverbindung mit dem ID-Token Attribute von dem ID-Token aus, wobei die geschützte Verbindung über das Mobilfunkgerät aufgebaut wird.

Der Erfindung liegt demgegenüber die Aufgabe zugrunde, ein verbessertes Verfahren zum Lesen zumindest eines Attributs zu schaffen, sowie ein entsprechendes Computerprogrammprodukt, einen ID-Token und ein Computersystem.

Ein vorteilhafter Aspekt von Ausführungsformen der vorliegenden Erfindung ist, dass der Aufbau einer geschützten Verbindung und die Abwicklung der über diese Verbindung zu erfolgenden Datenübertragung zur Ermöglichung Token-basierter Authentifizierungsverfahren auch auf vielen älteren Mobiltelefonen möglich ist, die über vergleichsweise geringe Prozessor- und Speicherleistung verfügen. Der Aufbau von geschützten Verbindungen z.B. durch Anwendung verschiedener kryptographischer Algorithmen für Token-basierte Authentifizierungsverfahren erfordert oft eine komplexe Software, welche vergleichsweise hohe Anforderungen an die Hardware, insbesondere den Prozessor und den Arbeitsspeicher des Mobilfunkgerätes, stellt. In einem Aspekt also ermöglichen Ausführungsformen der vorliegenden Erfindung die Ausführung komplexer Programmroutinen, die hohe Anforderungen an Prozessor und/oder Speicher stellen, auch auf Mobilfunkgeräten und/oder SIM-Karten mit sehr begrenzten Hardwareressourcen.

Ein weiterer vorteilhafter Aspekt von Ausführungsformen der vorliegenden Erfindung ist, dass Token-basierten Authentifizierungsverfahren ermöglicht werden, wobei ein Mobilfunkgerät als Lesegerät zum Aufbau einer Verbindung zu einem ID-Token verwendet werden kann, so dass die Notwendigkeit der Anschaffung einer speziellen Hardwarekomponente für diesen Zweck entfällt.

Ein weiterer vorteilhafter Aspekt von Ausführungsformen der vorliegenden Erfindung ist, dass die Software zum Aufbau einer oder mehrerer geschützter Verbindungen und zur Koordination des Datentransfers mittels eines Mobilfunkgerätes nicht mehr erfordert, dass der Eigentümer bzw. Nutzer des Mobilfunkgeräts eine spezielle Software auf dem Mobiltelefon installiert. Vielmehr ermöglichen es Ausführungsformen der vorliegenden Erfindung, dass der Mobilfunknetz-Provider die für die Token-basierte Nutzerauthentifizierung erforderlichen Programmmodule zentral auf allen von ihm verwalteten Mobilfunkgeräten bzw. einer Teilmenge hiervon aufspielt und wartet. Damit kann der Mobilfunknetz-Provider die entsprechende Funktionalität seinen Kunden schon beim Verkauf der Telekommunikations-Chipkarte, z.B. einer SIM-Karte, verfügbar machen.

Ein weiterer vorteilhafter Aspekt von Ausführungsformen der Erfindung ist der, dass Beschränkungen, die vielen Mobilfunktelefonen derzeit im Zusammenhang mit der Verwendung einer NFC Schnittstelle unterworfen sind, umgangen werden. Ein Problem bei der Verwendung einer NFC Schnittstelle zur Vermittlung der Kommunikation zwischen einem ID-Provider-Computersystem und einem ID-Token mittels eines Telekommunikationsgerätes besteht darin, dass ein entfernter Zugriff auf die NFC Schnittstelle eines Mobilfunkgerätes derzeit über ein Programm realisiert werden muss, welches direkt auf dem Mobiltelefon installiert ist. Der Nutzer muss sich also das erforderliche Programm selbst beschaffen und dieses auf seinem Mobilfunkgerät installieren. Dieses Verfahren kostet Zeit und ist zudem für viele technisch nicht versierte Nutzer zu umständlich. Ausführungsformen der vorliegenden Erfindung ermöglichen es, dass die notwendige Software zentral vom Mobilfunknetz-Provider aufgespielt wird.

In einem weiteren vorteilhaften Aspekt von Ausführungsformen der Erfindung wird eine zentral-verwaltbare Software zur Verwirklichung einer Token-basierten Nutzerauthentifizierung über ein Mobilfunkgerät bereitgestellt, wobei die Software endgeräte-unabhängig und dadurch ebenfalls einfacher zu warten ist.
In einem weiteren vorteilhaften Aspekt von Ausführungsformen der Erfindung wird ein System zur Token-basierten Authentifizierung mittels eines Mobilfunkgerätes bereitgestellt, welches vollständig zentral administrierbar ist und somit auch zentral verteilt werden kann. Gemäß Ausführungsformen der vorliegenden Erfindung erfordern die für den Betrieb des Systems notwendigen Softwarekomponenten und Module keine Installation durch den End-Nutzer sondern sind durch einen ID-Provider zusammen mit einem Mobilfunknetz-Betreiber vollständig administrierbar.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben.

Nach Ausführungsformen der Erfindung wird ein Verfahren zum Lesen zumindest eines in einem ID-Token gespeicherten Attributs geschaffen, wobei das ID-Token einem Nutzer zugeordnet ist. Dem Nutzer ist ferner eine Telekommunikations-Chipkarte zugeordnet, welche mindestens einen eindeutigen Identifikator besitzt, insbesondere die mobile Rufnummer des Nutzers. Alternativ oder zusätzlich können auch weitere eindeutige Identifikatoren der Telekommunikations-Chipkarte Verwendung finden, zum Beispiel die IMSI Nummer (International Mobile Subscriber Identity).

Die Zuordnung einer Telekommunikations-Chipkarte zu dem Nutzer kann z.B. darauf beruhen, dass der Nutzer Eigentümer der Telekommunikations-Chipkarte ist und die dieser Telekommunikations-Chipkarte zugehörige Mobilfunk-PIN kennt. Die Zuordnung einer Telekommunikations-Chipkarte zu dem Nutzer kann z.B. auch darauf beruhen, dass die Telekommunikations-Chipkarte Eigentum eines ersten Nutzers ist, welcher seine Telekommunikations-Chipkarte zur Nutzung an einen zweiten Nutzer weitergibt und dem zweiten Nutzer auch die zugehörige Mobilfunk-PIN mitteilt. Die Zuordnung der Telekommunikations-Chipkarte zu einem Nutzer kann auch nur vorübergehend bestehen, z.B. wenn ein Mobilfunkgerät, das die Telekommunikations-Chipkarte enthält, vorübergehend vom Eigentümer des Mobilfunkgerätes und der Telekommunikations-Chipkarte an eine andere Person verliehen wird.

Unter einer Telekommunikations-Chipkarte wird im Folgenden insbesondere jegliche Art von datenverarbeitendem Gerät verstanden, welches einen computer-lesbaren Speicher und einen Prozessor zum Ausführen der auf den Speicher vorhandenen Instruktionen besitzt, welches sich in einen Mobilfunkgerät integrieren lässt und welches in seinem Speicher Daten beinhaltet, welches es dem Mobilfunkgerät ermöglichen, sich in ein Mobilfunknetzwerk, insbesondere ein digitales Mobilfunknetzwerk, einzuwählen. Gemäß mancher Ausführungsformen der Telekommunikations-Chipkarte ist es auch möglich, dass die Telekommunikations-Chipkarte ein eigenständiges Mobilfunkgerät mit fest zugeordnetem Identifikator darstellt. Insbesondere bezeichnet der Begriff "Telekommunikations-Chipkarte" die derzeit weit verbreiteten SIM-Karten.

Das Verfahren beinhaltet die folgenden Schritte: Authentifizierung des Nutzers gegenüber dem ID-Token, Aufbau einer geschützten Verbindung zwischen dem ersten Computersystems und dem ID-Token, wobei der Aufbau der geschützten Verbindung durch eine Interaktion einer Telekommunikations-Chipkarte, die dem Nutzer zugeordnet ist, und eines Server-Computersystems bewirkt wird. Gemäß bevorzugter Ausführungsformen der Erfindung wird diese Interaktion durch die Interaktion eines ersten Programmoduls auf der Telekommunikations-Chipkarte mit einem zweiten Programmodul auf, das auf dem Server-Computersystem ausgeführt wird, realisiert, wobei das erste und zweite Programmodul interoperabel sind. Authentifizierung des ersten Computersystems (136) gegenüber dem ID-Token über die geschützte Verbindung, nach erfolgreicher Authentifizierung des Nutzers und des ersten Computersystems gegenüber dem ID-Token, Lesezugriff des ersten Computersystems auf das zumindest eine in dem ID-Token gespeicherte Attribut zur Übertragung des zumindest einen Attributs über ein Netzwerk. Hierdurch kann ein "Vertrauensanker" geschaffen werden. Insbesondere kann das Attribut signiert sein. Das Wort "Modul" wird im Folgenden synonym zu dem Begriff "Programmodul" benutzt.

Die Erfindung ermöglicht das Lesen eines oder mehrerer der in einem ID-Token gespeicherten Attribute durch das erste Computersystem, wobei die Verbindung zwischen dem ID-Token und dem ersten Computersystem über eine Mobilfunkverbindung aufgebaut werden kann. Bei dem zumindest einem Attribut kann es sich um eine Angabe bezüglich der Identität des dem ID-Token zugeordneten Nutzers handeln, insbesondere bezüglich dessen so genannter digitaler Identität. Beispielsweise werden durch das erste Computersystem die Attribute Name, Vorname, Adresse gelesen, um diese Attribute an ein zweites Computersystem, zum Beispiel eines Online-Dienstes, weiterzuleiten.

Es kann aber zum Beispiel auch nur ein einzelnes Attribut gelesen werden, welches nicht zur Feststellung der Identität des Nutzers, sondern beispielsweise zur Überprüfung der Berechtigung des Benutzers zur Inanspruchnahme eines bestimmten Online-Dienstes dient, wie zum Beispiel das Alter des Nutzers, wenn dieser einen Online-Dienst in Anspruch nehmen möchte, der einer bestimmten Altersgruppe vorbehalten ist, oder ein anderes Attribut, welches die Zugehörigkeit des Nutzers zu einer bestimmten Gruppe dokumentiert, welche zur Nutzung des Online-Dienstes berechtigt ist.

Bei dem ID-Token kann es sich um ein tragbares elektronisches Gerät, wie zum Beispiel einen so genannten USB-Stick, handeln oder um ein Dokument, insbesondere ein Wert- oder Sicherheitsdokument.

Unter einem "Dokument" werden erfindungsgemäß papierbasierte und/oder kunststoffbasierte Dokumente verstanden, wie zum Beispiel Ausweisdokumente, insbesondere Reisepässe, Personalausweise, Visa sowie Führerscheine, Fahrzeugscheine, Fahrzeugbriefe, Firmenausweise, Gesundheitskarten oder andere ID-Dokumente sowie auch Chipkarten, Zahlungsmittel, insbesondere Bankkarten und Kreditkarten, Frachtbriefe oder sonstige Berechtigungsnachweise, in die ein Datenspeicher zur Speicherung des zumindest einen Attributs integriert ist.

Ausführungsformen der Erfindung sind also besonders vorteilhaft, da das zumindest eine Attribut aus einem besonders vertrauenswürdigen Dokument, beispielsweise einem amtlichen Dokument, ausgelesen wird. Von besonderem Vorteil ist weiterhin, dass eine zentrale Speicherung der Attribute nicht erforderlich ist. Die Erfindung ermöglicht also ein besonders hohes Maß an Vertrauenswürdigkeit hinsichtlich der Mitteilung der zu einer digitalen Identität gehörenden Attribute, verbunden mit einem optimalen Datenschutz bei äußerst bequemer Handhabung.

Nach einer Ausführungsform der Erfindung hat das erste Computersystem zumindest ein Zertifikat, welches zur Authentifizierung des ersten Computersystems gegenüber dem ID-Token verwendet wird. Das Zertifikat beinhaltet eine Angabe derjenigen Attribute, für welche das erste Computersystem eine Leseberechtigung hat. Das ID-Token prüft anhand dieses Zertifikats, ob das erste Computersystem die erforderliche Leseberechtigung für den Lesezugriff auf das Attribut hat, bevor ein solcher Lesezugriff durch das erste Computersystem durchgeführt werden kann.

Unter einem "Zertifikat" wird hier ein digitales Zertifikat verstanden, welches auch als Public-Key-Zertifikat bezeichnet wird. Bei einem Zertifikat handelt es sich um strukturierte Daten, die dazu dienen, einen öffentlichen Schlüssel eines asymmetrischen Kryptosystems einer Identität, wie z.B. einer Person, einer Organisation oder einem Computersystem, zuzuordnen. Beispielsweise kann das Zertifikat dem Standard X.509 oder einem anderen Standard entsprechen.

Nach einer Ausführungsform der Erfindung sendet das erste Computersystem das zumindest eine von dem ID-Token ausgelesene Attribut unmittelbar an ein zweites Computersystem, im Folgenden auch "Dienst-Computersystem" genannt. Bei dem zweiten Computersystem kann es sich zum Beispiel um einen Server zur Erbringung eines Online-Dienstes oder eines sonstigen Dienstes, wie zum Beispiel einer Bankdienstleistung oder zur Bestellung eines Produkts handeln. Beispielsweise kann der Nutzer ein Konto online eröffnen, wozu Attribute, die die Identität des Nutzers beinhalten, von dem ersten Computersystem an das zweite Computersystem einer Bank übertragen werden.

Nach einer Ausführungsform der Erfindung erfolgt die Übertragung der aus dem ID-Token gelesenen Attribute von dem ersten Computersystem zunächst an ein drittes Computersystem des Nutzers, im Folgenden auch "Nutzer-Computersystem" genannt. Beispielsweise hat das dritte Computersystem einen üblichen Internetbrowser, mit dem der Nutzer eine Webseite des zweiten Computersystems öffnen kann.

Der Nutzer kann in die Webseite eine Dienst-Anforderung, z.B. eine Anforderung oder Bestellung für einen Dienst oder ein Produkt eingeben. Hierbei teilt der Nutzer dem auf dem zweiten Computersystem bereitgestellten Dienst einen Identifikator der dem Nutzer zugeordneten Telekommunikations-Chipkarte mit. Die Mitteilung kann zum Beispiel durch eine explizite Eingabe des Identifikators, zum Beispiel der Mobilfunkrufnummer der Telekommunikations-Chipkarte in ein entsprechendes HTML Feld des im Browser dargestellten HTML Formulars erfolgen. Der Identifikator kann sodann als zusätzliches Attribut eines HTTP-Request an das Dienst-Computersystem übermittelt werden. Die Übermittlung der vom Benutzer spezifizierten Daten einschließlich des Identifikators kann zum Beispiel basierend auf dem HTTP-Protokoll von dem auf dem Nutzer-Computersystem installierten Web-Browser an das Dienst-Computersystem übermittelt werden. Zum Beispiel kann die Übermittlung mittels der HTTP-GET Methode erfolgen, nach welcher die vom Nutzer spezifizierten Attribute als "name-value" Paare einer URL angehängt werden.

Eine durch die Eingabe Parameter des Nutzers spezifizierte URL könnte also lauten: http://www.dienst-server.com/kreditvertrag/cgi/antrag.cgi?vorname=tobias&nach-name=mueller&mobile-number=0123-4567

Das zweite Computersystem spezifiziert nach Erhalt der Dienst-Anforderung des Nutzer-Computersystems diejenigen Attribute, zum Beispiel des Nutzers oder seines ID-Tokens, welche es für die Erbringung des Dienstes oder die Annahme der Bestellung benötigt.

Nach Ausführungsformen der Erfindung wird dem Benutzer zunächst zum Beispiel durch einen Refresh der in dem Browser angezeigten HTML Seite ein Link zu einem ID-Serviceprovider angezeigt. Der Nutzer hat nun die Möglichkeit, den angebotenen ID-Serviceprovider zum Beispiel durch Klicken des angebotenen Links zu akzeptieren. Die URL des Links kann z.B. Dienst- und Nutzerspezifische Parameter beinhalten, insbesondere die auszulesenden Attribute und den Identifikator. Nach weiteren Ausführungsformen stellt der Dienst dem Benutzer mehrere ID-Serviceprovider zur Auswahl, zum Beispiel über mehrere Links, so dass der Nutzer nun auswählen kann, über welchen ID-Serviceprovider Attribute aus einem dem Nutzer zugeordneten ID-Token gelesenen und an den Dienst übermittelt werden sollen. Gemäß weiteren Ausführungsformen kann der Nutzer den ID-Serviceprovider auch selbst spezifizieren, zum Beispiel durch Eingabe der URL des ersten Computersystems in eine Webseite des zweiten Computersystems von dem dritten Computersystem aus.

Nach der Auswahl eines ID-Service Providers durch den Nutzer werden das zumindest eine von dem ID-Token des Nutzers auszulesenden Attribute sowie der Identifikator der dem Nutzer zugeordneten Telekommunikations-Chipkarte an das Computersystem des ID-Providers übermittelt. Das Computersystem des ID Providers wird im Folgenden auch als "erstes Computersystem" bezeichnet. Die Übermittlung der ein oder mehreren auszulesenden Attribute sowie des Identifikators kann zum Beispiel ebenfalls durch die HTTP-GET Methode erfolgen, gemäß welcher die zu übertragenden Daten als "name-value" Paare der URL angehängt werden.

Nach einer Ausführungsform der Erfindung beinhaltet die Dienst-Anforderung des Nutzers an das zweite Computersystem die Angabe eines zweiten Identifikators, wobei der zweite Identifikator das erste Computersystem identifiziert. Beispielsweise handelt es sich bei dem zweiten Identifikator um einen Link, beispielsweise eine URL des ersten Computersystems.

Nach weiteren Ausführungsformen der Erfindung erfolgen die Übermittlung der auszulesenden Attribute sowie die Auswahl des ID-Service Providers ohne erneute Zwischenschaltung des dritten Computersystems. In diesem Fall sendet das zweite Computersystem nach Erhalt der Dienst-Anforderung eine erste Anfrage an ein erstes Computersystem, welches entweder bereits in der Dienst-Anfrage durch den zweiten Identifikator spezifiziert ist oder durch das zweite Computersystem bestimmt wird.

Nach einer Ausführungsform der Erfindung werden die aus dem ID-Token ausgelesenen Attribute von dem ersten Computersystem signiert und dann an das dritte Computersystem übertragen. Der Nutzer des dritten Computersystems kann die Attribute also lesen, ohne sie jedoch verändern zu können. Erst nach Freigabe durch den Nutzer werden die Attribute von dem dritten Computersystem an das zweite Computersystem weitergeleitet.

Nach einer Ausführungsform der Erfindung kann der Nutzer die Attribute vor deren Weiterleitung durch weitere Daten ergänzen.

Nach einer Ausführungsform der Erfindung hat das erste Computersystem mehrere Zertifikate mit verschiedenen Leserechten. Aufgrund des Empfangs der Attributspezifizierung wählt das erste Computersystem eines oder mehrere dieser Zertifikate aus, um die entsprechenden Attribute aus dem ID-Token oder mehreren verschiedenen ID-Token auszulesen. Ausführungsformen der Erfindung sind ganz besonders vorteilhaft, da ein Mobilfunkgerät, wie zum Beispiel ein sogenanntes Handy oder ein Smartphone, welches eine erfindungsgemäße Telekommunikations-Chipkarte enthält, für den Lesezugriff des ersten Computersystems auf das ID-Token verwendet werden kann. Hierzu hat das ID-Token eine erste Schnittstelle und die Telekommunikations-Chipkarte des Mobilfunkgeräts hat neben ihrer Mobilfunk-Schnittstelle eine weitere, zweite Schnittstelle. Über die ersten und zweiten Schnittstellen können Daten zwischen dem ID-Token und der Telekommunikations-Chipkarte ausgetauscht werden.

Die ersten und zweiten Schnittstellen haben beispielsweise eine relativ geringe Reichweite, von weniger als 1 m, insbesondere weniger als 20 cm. Insbesondere können die ersten und zweiten Schnittstellen für eine sogenannte Nahfeldkommunikation, insbesondere nach einem Near Field Communication (NFC) Standard und/oder nach dem Standard ISO/IEC 14443 ausgebildet sein.

Die Mobilfunk-Schnittstelle der Telekommunikations-Chipkarte kann zur Kommunikation über ein digitales zellulares Mobilfunknetzwerk ausgebildet sein, wie zum Beispiel nach einem Mobilfunkstandard, insbesondere nach einem oder mehreren der GSM, UMTS, CDMA und/oder CDMA 2000 Standards. Von besonderem Vorteil ist hier insbesondere, dass ein Benutzer das üblicherweise ohnehin vorhandene Mobilfunkgerät und darin enthaltene Telekommunikations-Chipkarte zur Ermöglichung des Zugriffs des ersten Computersystems auf das ID-Token verwenden kann, ohne dass ein zusätzliches Lesegerät erforderlich ist.

Nach einer Ausführungsform der Erfindung wird von dem dritten Computersystem direkt eine erste Anfrage an das erste Computersystem gesendet, um zumindest eines der Attribute aus dem ID-Token auszulesen. Die erste Anfrage kann eine Attributspezifizierung der von dem ersten Computersystem aus dem ID-Token auszulesenden ein oder mehreren Attribute beinhalten. Die erste Anfrage beinhaltet zudem den Identifikator der Telekommunikations-Chipkarte.

Nach weiteren Ausführungsformen werden aufgrund der Nachricht von dem ersten Computersystem ein oder mehrere durch das zweite Computersystem vorbestimmte Attribute aus dem ID-Token ausgelesen oder beispielsweise sämtliche Attribute, auf die das erste Computersystem in dem ID-Token Zugriff hat. In diesem Fall muss die Dienst-Anforderung des Nutzer-Computersystems an das Dienst-Computersystem lediglich den Identifikator der Telekommunikations-Chipkarte umfassen.

Nach Empfang der ersten Anfrage, die eine Spezifikation eines oder mehrerer auszulesenden Attribute sowie den Identifikator einer Telekommunikations-Chipkarte beinhaltet, durch das erste Computersystem, sendet das erste Computersystem eine zweite Anfrage, im Folgenden auch als "MNP-Anfrage" genannt, an eine MNP Datenbank. Die zweite Anfrage beinhaltet zumindest den Identifikator der Telekommunikations-Chipkarte.

Eine MNP (Mobile Number Portability)-Datenbank ist eine Datenbank, welche dem Nutzer einer Mobilfunknummer die Mitnahme der Mobilfunknummer bei einem Wechsel des Mobilfunknetz-Providers ermöglicht. Hierbei wird bei Anbieterwechsel die komplette Rufnummer inklusive Vorwahl behalten. Dies hat zur Folge, dass eine Vorwahl nicht mehr eindeutig für einen bestimmten Mobilfunknetz-Provider ist. Die MNP-Datenbank weist jeder Mobilfunknummer einschließlich der zugehörenden Vorwahl eindeutig einen bestimmten Mobilfunknetz-Provider zu. In Tabelle 1 ist dieses Mapping exemplarisch dargestellt. Das Mapping kann zum Beispiel in Form einer Tabelle einer relationalen Datenbank implementiert sein.

**Tabelle 1:**

| Identifikator, zum Beispiel vollständige Mobilfunk-Nummer | Mobilfunknetz-Provider |
|---|---|
| Mobilfunknummer 1 | Provider 13 |
| Mobilfunknummer 2 | Provider 14 |
| Mobilfunknummer 3 | Provider 14 |
| Mobilfunknummer 4 | Provider 130 |

Je nach Ausführungsform kann dabei direkt eine Datenbankverbindung zu einer entfernten MNP-Datenbank aufgebaut werden oder es kann eine Anfrage an einen MNP-Server, auf welchem eine MNP Datenbank bereitgestellt wird, erfolgen. Nach Erhalt der zweiten Anfrage ermittelt das MNP-Datenbanksystem beziehungsweise der MNP-Server den zu dem in der ersten Anfrage enthaltenen Identifikator zugehörigen Mobilfunknetz-Provider. Der ermittelte Mobilfunknetz-Provider wird mittels einer ersten Antwort von der MNP-Datenbank an das erste Computersystem übermittelt.

Im nächsten Schritt wird ein dem ermittelten Mobilfunknetz-Provider zugehöriger OTA-Server ermittelt.

Ein OTA-Server ist insbesondere ein Server, der üblicherweise von einem bestimmten Mobilfunknetz-Provider betrieben wird oder diesem zugeordnet ist, welcher basierend auf der "Over-The-Air"-Technologie mit den von den Mobilfunknetz-Provider ausgestellten Telekommunikations-Chipkarten selektiv kommunizieren kann. Diese Kommunikation kann zum Beispiel das Aufspielen von Applikationen beziehungsweise von deren Updates auf bestimmte oder auf alle Telekommunikations-Chipkarten des Mobilfunknetz-Providers beinhalten. Die Kommunikation erfordert dabei keine physikalische Verbindung zwischen dem OTA-Server und der Telekommunikations-Chipkarte. Ein OTA-Server ermöglicht es also einen Mobilfunknetz-Provider, neue Services automatisch auf seinem Telekommunikations-Chipkarten aufzuspielen beziehungsweise diese zu warten. Dadurch kann die Telekommunikations-Chipkarte um neue Funktionen ergänzt werden, ohne dass ein Firmware Update erforderlich ist.

OTA-Server werden also üblicherweise von Mobilfunknetzbetreibern dazu benutzt, Daten auf Telekommunikations-Chipkarten aufzuspielen beziehungsweise diese zu verändern. Ein OTA-Server kann auch dazu verwendet werden, z.B. Konfigurationsdaten per SMS an die Mobilfunkgeräte zu senden, wobei die Konfigurationsdaten z.B. einen Netzwerkzugang basierend auf verschiedenen Netzwerkprotokollen vermitteln können.

Ein OTA-Server bedient sich bei der Wartung von auf einer Telekommunikations-Chipkarte befindlichen Programmen des sog. SIM Application Toolkits (STK, gelegentlich auch mit "SAT" abgekürzt). Das STK ist ein Standard für GSM Systeme, welcher aus einer Reihe auf der Telekommunikations-Chipkarte installierten Programminstruktionen besteht, welche festlegen, wie der Datenaustausch der Telekommunikations-Chipkarte mit anderen Komponenten des Mobilfunkgerätes bzw. der Außenwelt zu erfolgen hat. Insbesondere kontrolliert das STK den Datenaustausch über das Mobilfunknetz sowie über weitere Schnittstellen der Telekommunikations-Chipkarte.

OTA-Server vermitteln also z.B. dem Betreiber eines Mobilfunknetzes die Möglichkeit, mittels einer zentralen Instanz (OTA-Server) Änderungen und Updates des STK einer Telekommunikations-Chipkarte zu veranlassen. Der OTA-Server hat zudem die Möglichkeit, durch Übermittlung technischer Nachrichten an eine Telekommunikations-Chipkarte, z.B. eine technische SMS, bestimmte Methoden und/oder Funktionen des STK zu aktivieren und dadurch den Aufbau und/oder das Schließen von Datenübertragungskanälen der Telekommunikations-Chipkarte, z.B. über deren Mobilfunkschnittstelle oder über deren NFC-Schnittstelle, zu kontrollieren.

Der Begriff "technische Nachricht" bezeichnet insbesondere Daten, welche an ein oder mehrere Empfangsgeräte, insbesondere ein oder mehrere Mobilfunkgeräte, gesendet werden, und welche für den Betrieb dieses Gerätes relevant sind, insbesondere Konfigurationsdaten, Steuerungsbefehle, Mitteilungen über Systemeigenschaften des Senders, z.B. eines OTA-Servers, etc. Eine technische Nachricht kann z.B. in Form einer SMS von dem Sendegerät an das Empfangsgerät gesandt werden. So kann ein OTA-Server beispielsweise an ein oder mehrere Mobilfunkgeräte technische Nachrichten senden, wobei dies insbesondere in der Form einer SMS geschehen kann, die "technische SMS" genannt wird. Eine "technische SMS" ist also eine technische Nachricht im SMS Format. Der Zweck einer technischen Nachricht, insbesondere einer technischen SMS, die von einem OTA-Server an ein oder mehrere Mobilfunkgeräte gesendet wird, ist also insbesondere die Ermöglichung bzw. Aufrechterhaltung der Betriebs- und/oder Kommunikations-Fähigkeit des Mobilfunkgerätes, in welchem sich die Telekommunikations-Chipkarte, an weiche die technische Nachricht gerichtet ist, befindet. Insbesondere kann eine technische Nachricht dazu dienen, die Ausführung bestimmter Programminstruktionen durch die Telekommunikations-Chipkarte zu veranlassen, d.h., zu "triggern".

Die Ermittlung des dem Mobilfunknetz-Provider zughörigen OTA-Servers kann z.B. durch die MNP-Datenbank geschehen, z.B. mittels einer zweiten Tabelle einer relationalen Datenbank, welche jedem Mobilfunknetz-Provider der ersten Tabelle einem OTA-Server zuordnet. Die Angaben zu de OTA-Server können Adressierungsdaten beinhalten, z.B. eine IP-Nummer. Tabelle 2 stellt beispielhaft eine solche zweite Datenbanktabelle dar.

**Tabelle 1:**

| Identifikator, zum Beispiel vollständige Mobilfunk-Nummer | Mobilfunknetz-Provider |
|---|---|
| Provider 13 | OTA-Server 13 (Adressierungsdaten) |
| Provider 14 | OTA-Server 14 (Adressierungsdaten) |
| Provider 130 | OTA-Server 130 (Adressierungsdaten) |

In diesem Fall enthält die Antwort der MNP-Datenbank an das erste Computersystem zusätzlich oder anstatt der Providerangaben die Adressierungsdaten des für eine Telekommunikations-Chipkarte mit dem in der zweiten Anfrage spezifizierten Identifikator OTA-Servers.

Gemäß anderer Ausführungsformen der Erfindung verfügt das erste Computersystem über Mittel, einem bestimmten Mobilfunknetz-Provider einen OTA-Server zuzuordnen. In diesem Fall ist es ausreichend, wenn die Antwort der MNP-Datenbank den dem Identifikator zugehörigen Mobilfunknetz-Provider spezifiziert.

Im nächsten Schritt sendet das erste Computersystem eine Auslese-Anfrage oder "dritte Anfrage" an den OTA-Server des durch die MNP-Datenbank ermittelten Mobilfunknetz-Providers der Telekommunikations-Chipkarte.

Der OTA-Server empfängt die dritte Anfrage des ersten Computersystems, wobei die dritte Anfrage den Identifikator der Telekommunikations-Chipkarte des Nutzers beinhaltet, und transformiert die dritte Anfrage in eine Nachricht in Form einer technischen SMS, auch als "Trigger-SMS" bezeichnet, welche an die durch den Identifikator identifizierbare und adressierbare Telekommunikations-Chipkarte gesendet wird.

Nach Erhalt der Nachricht durch den OTA-Server initialisiert die Telekommunikations-Chipkarte die Ausführung eines ersten Modules durch einen Prozessor der Telekommunikations-Chipkarte. Bei dem ersten Modul handelt es sich gemäß bevorzugter Ausführungsformen der Erfindung um ein auf dem SIM-Application-Toolkit Standard basierendes Programmodul.

Die Telekommunikations-Chipkarte beinhaltet ein computer-lesbares, nicht flüchtiges Speichermedium. Dieses Speichermedium beinhaltet computer-interpretierbare Instruktionen eines ersten Software-oder Firmware-Moduls, im Folgenden als "erstes Modul" bezeichnet. Alternativ kann das erste Modul auch als Hardware-Modul, d.h. als Logikschaltung, ausgebildet sein. Das erste Modul kann zum Beispiel durch den OTA-Server zur Auslieferung der Telekommunikations-Chipkarte oder zu einem späteren Zeitpunkt auf der Telekommunikations-Chipkarte installiert worden sein. Nach Ausführungsformen der Erfindung handelt es sich bei dem ersten Modul um ein Softwaremodul, welches beispielsweise auf dem STK Standard aufbaut.

Der Begriff des "computer-lesbaren Speichermediums" bezeichnet im Folgenden ein einzelnes oder eine Mehrzahl von Speichermedien, welche zur nicht-flüchtigen Speicherung von computer-interpretierbaren Daten und Instruktionen geeignet sind. Das computer-lesbare Speichermedium kann dabei z.B. als Flash-Laufwerk, magnetische oder optische Datenspeicher, CD-ROMs, magneto-optische Speicher, ROMs, RAMs oder anderes Speichermedium ausgebildet sein.

Das erste Modul ist mit einem zweiten Software-oder Firmware-Modul, im Folgenden als "zweites Modul" bezeichnet, interoperabel. Das zweite Modul ist auf einem computer-lesbaren, nicht flüchtigen Speichermedium eines Server-Computersystems gespeichert und enthält computer-interpretierbare Instruktionen, die von dem Prozessor des Server-Computersystems ausgeführt werden können. Alternativ kann das zweite Modul auch als Hardware-Modul, d.h. als Logikschaltung, ausgebildet sein.

Die Initialisierung der Ausführung des ersten Moduls durch den Prozessor der Telekommunikations-Chipkarte beinhaltet, dass vermittelt durch das erste Modul in Wechselwirkung mit dem zweiten Modul ein erster Datenübertragungs-Kanal zwischen der Telekommunikations-Chipkarte und dem Server-Computersystem aufgebaut wird. Die für den Aufbau des ersten Datenkommunikations-Kanals erforderlichen Adressangaben können zum Beispiel fest in den Programminstruktionen des ersten Moduls implementiert sein.

Zusätzlich oder alternativ dazu kann das erste Modul dem Benutzer die Möglichkeit einräumen, zum Beispiel über eine entsprechende Benutzerabfrage über das Mobilfunkgerät das Server-Computersystem zu spezifizieren.

Im nächsten Schritt wird ein zweiter Datenkommunikations-Kanal vermittels des zweiten Moduls aufgebaut, wobei der zweite Datenkommunikations-Kanal das Server-Computersystem mit dem ersten Computersystem verbindet. Gemäß weiterer Ausführungsformen der Erfindung werden die Daten, die zur Adressierung des ersten Computersystems durch das Server-Computersystem notwendig sind, innerhalb der dritten Anfrage des ersten Computersystems an den OTA-Server übergeben. Der OTA-Server gibt die Adressierungsdaten dann in der ersten oder einer weiteren technischen SMS an die in der dritten Anfrage spezifizierte Telekommunikations-Chipkarte weiter. Nach Aufbau des ersten Datenübertragungs-Kanals können die Adressierungsdaten des ersten Computersystems von der Telekommunikations-Chipkarte an das Server-Computersystem übermittelt werden, wo sie zum Aufbau des zweiten Datenkommunikations-Kanals verwendet werden.

Nach Aufbau des ersten und zweiten Datenkommunikations-Kanals erfolgt der Aufbau eines dritten Datenkommunikations-Kanals zwischen der Telekommunikations-Chipkarte und dem ID-Token des Nutzers. Gemäß anderer Ausführungsformen der Erfindung kann der Aufbau des dritten Datenübertragungs-Kanals auch vor den Aufbau des ersten und zweiten Datenkommunikations-Kanals erfolgen. Der Aufbau des dritten Datenkommunikations-Kanals wird durch das erste Modul der Telekommunikationschipkarte initiiert.

Gemäß weiteren Ausführungsformen basiert der erste Datenübertragungs-Kanal auf den TCP/IP Protokoll und wird durch die Mobilfunkschnittstelle der Telekommunikations-Chipkarte vermittelt.

Gemäß weiteren Ausführungsformen basiert der zweite Datenübertragungs-Kanal auf einer Netzwerkverbindung, beispielsweise über das Internet. Beispielsweise kann das TCP/IP Protokoll zum Datenaustausch über den zweiten Datenkommunikationskanal verwendet werden.

Gemäß weiterer vorteilhafter Ausführungsformen basiert der dritte Datenübertragungs-Kanal auf dem PACE-Protokoll. Gemäß weiteren Ausführungsformen kann auch das Basic-Access-Protokoll (BAC-Protokoll) oder vergleichbare Protokolle zum Aufbau des dritten Datenübertragungs-Kanals Verwendung finden. Der dritte Datenübertragungs-Kanal wird in Ausführungsformen der Erfindung über eine NFC-Schnittstelle der Telekommunikations-Chipkarte vermittelt. Nach einer Ausführungsform der Erfindung basiert das Protokoll des dritten Datenkommunikations-Kanals auf einem Protokoll, welches das Auslesen einer optischen Informationen von dem ID-Token erfordert, beispielsweise einer Token-Zugriffsnummer, z.B. einer CAN (Card Access Number). Dies kann zum Beispiel durch Auslesen eines maschinenlesbaren Musters auf dem ID-Token oder, sofern vorhanden, Auslesen eines auf einem Display des ID-Tokens angezeigten Musters, insbesondere in Form eines zweidimensionalen Barcodes, durch einen entsprechend des Lesegerät eines Mobilfunkgerätes, welches die Telekommunikations-Chipkarte beinhaltet, erfolgen. Dieses maschinenlesbare Muster, insbesondere also der zweidimensionale Barcode, kann optisch zum Beispiel mit Hilfe einer in das Mobilfunkgerät integrierten Kamera erfasst werden.

Gemäß bevorzugter Ausführungsformen der Erfindung beinhalten das erste Modul im Wesentlichen computer-interpretierbare Instruktionen, die den Daten-Input und - Output über die Schnittstellen der Telekommunikations-Chipkarte, insbesondere der Schnittstellen zum Aufbau des ersten und dritten Datenübertragungs-Kanals, kontrollieren. Die Kontrolle bezieht sich dabei bevorzugt auf die unteren Protokollebenen des OSI-Referenzmodells (OSI-Open System Interconnection), z.B. der physikalischen Schicht, der Sicherungsschicht und/oder der Vermittlungsschicht.

Das zweite Modul auf dem Server-Computer ist mit dem ersten Modul interoperabel, so dass es zusammen mit dem ersten Modul den ersten Datenübertragungs-Kanal aufbauen und Daten über diesen mit der Telekommunikations-Chipkarte austauschen kann.

Nach Ausführungsformen der Erfindung besitzt das zweite Modul zudem computer-interpretierbare Instruktionen zum Aufbau eines zweiten Datenübertragungs-Kanals mit dem ersten Computersystem.

Nach Ausführungsformen der Erfindung besitzt das zweite Modul zudem computer-interpretierbare Instruktionen zur Kontrolle des Datenaustausches auf den höhergeordneten Schichten des OSI-Referenzmodelles, insbesondere der Transportschicht (Ende-zu-Ende Kontrolle), der Kommunikationssteuerungsschicht, Darstellungsschicht und Anwendungsschicht.

Die Aufteilung der Kontrolle der Kommunikation nach dem OSI-Referenzmodell zwischen dem ersten und zweiten Modul hängt dabei im Detail von der jeweiligen Ausführungsform der Erfindung ab. Ausführungsformen, gemäß welcher insbesondere Datenfluß-Kontrollprozesse, die hinsichtlich der benötigten Hardware-Ressourcen anspruchsvoll sind, von dem zweiten Modul übernommen werden, sind wegen der begrenzten Hardware-Ressourcen, die auf einer Telekommunikations-Chipkarte im Regelfall zur Verfügung stehen, besonders vorteilhaft.

Nach Ausführungsformen der Erfindung kontrolliert das zweite Modul die Protokollumsetzung der zur Datenübertragung auf dem ersten und zweiten Datenübertragungs-Kanals. Die Kontrolle der Protokollumsetzung hat zur Folge, dass durch den ersten, zweiten und dritten Datenkommunikations-Kanal eine geschützte Verbindung zwischen dem ID-Token und dem ersten Computersystem aufgebaut wird, über welche eine geschützte Auslesung der in der ersten Anfrage spezifizierten Attribute aus dem ID-Token durch das erste Computersystem erfolgen kann. Die geschützte Verbindung kann z.B. als Ende-zu-Ende Verbindung umgesetzt sein. Unter einer "Protokollumsetztung" wird insbesondere ein Verfahren verstanden, bei welchem die zur Datenübertragung auf zwei oder mehreren DatenübertragungsKanälen verwendeten Protokolle im Wesentlichen durch Softwaremittel so übersetzt werden, dass eine Datenübertragung über diese zwei oder mehr Datenübertragungs-Kanäle hinweg möglich ist.

Durch geeignete Protokollumsetzung kann also höhergeordneten Funktionen des zweiten Moduls eine geschützte Verbindung zur Verfügung gestellt werden, die eigentlich auf drei unterschiedlichen physikalischen Datenkommunikations-Kanälen beruht, nämlich dem ersten, zweiten und dritten Datenübertragungs-Kanal. Ein Datenwert, der z.B. zunächst über den zweiten Datenübertragungs-Kanal vom ersten Computersystem an das Server-Computersystem gesendet wird, kann von dort aus über den ersten Datenübertragungs-Kanal an die Telekommunikations-Chipkarte übermittelt werden. Von dort aus kann der Datenwert über den dritten Datenkommunikations-Kanal an das ID-Token übermittelt werden. Bei dem Datenwert kann es sich beispielsweise um einen Befehl zum Auslesen eines oder mehrerer in dem ID-Token gespeicherter Attribute handeln. Durch geeignete Protokollumsetzung kann aus besagten drei physikalischen Datenkommunikations-Kanälen eine einzige geschützte Verbindung aufgebaut werden.

Falls dies zur Verwirklichung der in dem zweiten Modul implementierte Funktionalität hilfreich ist, kann z.B. durch entsprechende, durch das zweite Modul kontrollierte Protokollumsetzung auch beispielsweise ein weiterer virtueller vierter DatenKommunikationskanal zwischen der Telekommunikations-Chipkarte und dem ersten Computersystem aufgebaut werden. Der vierte Datenübertragungs-Kanal ist also ein virtueller Datenübertragungskanal, der auf dem ersten und dem zweiten physikalischen Datenübertragungs-Kanal beruht.

Gemäß weiteren Ausführungsformen ist es auch möglich, dass der vierte Datenübertragungs-Kanal nicht als zusätzlicher virtueller Datenkommunikationskanal ausgebildet ist, sondern als physikalischer Datenübertragungskanal zwischen der Telekommunikations-Kanal und dem ersten Computersystem und den zweiten Datenübertragungs-Kanal funktional ersetzt und dadurch überflüssig macht. Analog zu dem zweiten Datenübertragungs-Kanal kann auch der vierte physikalisch ausgeprägte Datenübertragungs-Kanal z.B. auf einer Netzwerkverbindung beruhen, beispielsweise dem Internet, sofern die Telekommunikations-Chipkarte über eine entsprechende Schnittstelle verfügt. Beispielsweise kann das TCP/IP Protokoll zum Datenaustausch über den zweiten Datenkommunikationskanal verwendet werden. Durch entsprechende Anpassung der Protokollumsetzung ist es nämlich auch möglich, basierend auf dem ersten, dritten und vierten physikalischen Datenübertragungs-Kanal eine geschützte Verbindung zwischen dem ersten Computersystem und dem ID-Token aufzubauen. Im Folgenden werden Ausführungsformen basierend auf dem Aufbau eines ersten, zweiten und dritten physikalischen Datenübertragungs-Kanals zum Aufbau der geschützten Verbindung zwischen dem ersten Computersystem und dem ID-Token beschrieben. Der zweite Datenkommunikationskanal ist dabei jeweils durch den vierten Datenübertragungs-Kanal ersetzbar, entsprechende Anpassungen im ersten und zweiten Modul vorausgesetzt.

Gemäß weiteren Ausführungsformen beinhaltet das zweite Modul ferner Computer-interpretierbare Instruktionen zur Ausführung eines Bürgerclients gemäß des eCard-API-Frameworks, spezifiziert in der technischen Richtline TR-03112 des Bundesamtes für Sicherheit in der Informationstechnik ("eCard-API-Framework", BSI TR-03112-1, Version 1.1, 15.07.2009).

Nach Ausführungsformen der Erfindung werden durch die Interaktion des ersten und zweiten Moduls also zunächst drei physikalische Datenkommunikations-Kanäle erzeugt, und durch die Protokollumsetzung durch das zweite Modul wird eine geschützte Verbindung zwischen dem ID-Token und dem ersten Computersystem aufgebaut, über welche das erste Computersystem ein oder mehrere im ID-Token gespeicherte Attribute auslesen kann.

Nach einer Ausführungsform der Erfindung wird die geschützte Verbindung mit einer Ende-zu-Ende-Verschlüsselung zwischen dem ID-Token und dem ersten Computersystem über den ersten, zweiten und dritten Datenkommunikations-Kanal aufgebaut. Dadurch wird sichergestellt, dass die einseitige oder gegenseitige Authentifizierung des ersten Computersystems und des ID-Tokens sowie die Übertragung des oder der aus dem ID-Token ausgelesenen Attribute über die geschützte Verbindung unverfälscht stattfinden kann.

Nach einer Ausführungsform der Erfindung sendet das erste Computersystem das oder die Attribute in signierter Form an das dritte Computersystem.

Nach einer Ausführungsform der Erfindung handelt es sich bei dem ersten Computersystem um ein ID-Provider-Computersystem, wie zum Beispiel ein Trustcenter, welches von einem Zertifizierungsdienstanbieter (ZDA) betrieben wird, bei dem zweiten Computersystem um ein Dienst-Computersystem, wie zum Beispiel eine Internetplattform, die von einem kommerziellen Anbieter oder von einer Behörde zur Erbringung einer behördlichen Dienstleistung betrieben wird, und bei dem dritten Computersystem um ein Nutzer-Computersystem, wie zum Beispiel einen PC oder einen Laptopcomputer des Nutzers.

Ausführungsformen der Erfindung sind ferner besonders vorteilhaft, da eine Nutzung des ID-Provider-Computersystems von dem Nutzer-Computersystem aus auch dann möglich ist, wenn das Nutzer-Computersystem nicht über eine Schnittstelle zum Zugriff auf das ID-Token verfügt oder wenn an das Nutzer-Computersystem ein entsprechendes Lesegerät zum Zugriff auf das ID-Token nicht anschließbar ist, nicht verfügbar ist, oder aus Gründen der Netzwerkadministration nicht angeschlossen werden darf. In diesem Fall kann der Nutzer sein zumeist ohnehin vorhandenes Mobilfunkgerät ergänzend zu seinem Nutzer-Computersystem verwenden, um den von dem ID-Provider-Computersystem zur Verfügung gestellten Vertrauensanker zu nutzen.

In einem weiteren Aspekt betrifft die Erfindung ein Computerprogrammprodukt, insbesondere ein digitales Speichermedium, mit ausführbaren Programminstruktionen zur Durchführung eines erfindungsgemäßen Verfahrens.

In einem weiteren Aspekt betrifft die Erfindung einen ID-Token mit einer ersten Schnittstelle zur Kommunikation mit einer Telekommunikations-Chipkarte über einen dritten Datenübertragungs-Kanal, einem geschützten Speicherbereich zur Speicherung von zumindest einem Attribut, Mitteln zur Authentifizierung eines dem ID-Token zugeordneten Nutzers (102) gegenüber dem ID-Token, Mitteln zur Authentifizierung eines ersten Computersystems gegenüber dem ID-Token, Mitteln zum Aufbau einer geschützten Verbindung über das Mobilfunkgerät zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist.

Zusätzlich zu der Authentifizierung des ersten Computersystems gegenüber dem ID-Token, wie sie an sich zum Beispiel als so genannte Extended Access Control für maschinenlesbare Reisedokumente (machine-readable travel documents - MRTD) bekannt und von der internationalen Luftfahrtbehörde ICAO spezifiziert ist, muss sich also der Nutzer gegenüber dem ID-Token authentifizieren. Beispielsweise wird durch eine erfolgreiche Authentifizierung des Nutzers gegenüber dem ID-Token dieser freigeschaltet, sodass die weiteren Schritte, nämlich die Authentifizierung des ersten Computersystems gegenüber dem ID-Token und/oder der Aufbau einer geschützten Verbindung zum Auslesen der Attribute, ablaufen können.

Nach einer Ausführungsform der Erfindung hat das ID-Token Mittel für eine Ende-zu-Ende-Verschlüsselung. Dies ermöglicht es, die Verbindung zwischen dem ID-Token und dem ersten Computersystem über ein drittes Computersystem des Nutzers aufzubauen, da der Nutzer aufgrund der Ende-zu-Ende-Verschlüsselung keine Änderungen der über die Verbindung übertragenen Daten vornehmen kann.

In einem weiteren Aspekt betrifft die Erfindung ein erstes Computersystem mit einem Prozessor, einen computer-lesbaren, nicht flüchtigen Speichermedium, Mitteln zum Empfang einer Nachricht über ein Netzwerk von einem zweiten Computersystem, wobei die Nachricht zumindest den Identifikator der dem Nutzer zugeordneten Telekommunikations-Chipkarte sowie die Spezifikation zumindest eines Attributes das von einem ID-Token durch das erste Computersystem ausgelesen werden soll, enthält, Mitteln zur Authentifizierung gegenüber einem ID-Token über eine Verbindung, die mit Hilfe der durch den Identifikator spezifizierten Telekommunikations-Chipkarte hergestellt wird, Mitteln zum Lesen des zumindest einen spezifizierten Attributs aus dem ID-Token über eine geschützte Verbindung, wobei das Lesen des zumindest einen Attributs voraussetzt, dass sich ein dem ID-Token zugeordneter Nutzer und das Computersystem gegenüber dem ID-Token authentifiziert haben.

In einem weiteren Aspekt betrifft die Erfindung ein Server-Computersystem, mit einem Prozessor, einem computer-lesbaren, nicht flüchtigen Speichermedium, Mitteln zum Aufbau eines ersten Datenkommunikations-Kanals zu einer erfindungsgemäßen Telekommunikations-Chipkarte, Mitteln zum Aufbau eines zweiten Datenkommunikations-Kanals mit einem erfindungsgemäßen ersten Computersystem, einem zweiten Modul mit computer-interpretierbaren Instruktionen zum Aufbau einer geschützten Verbindung zwischen einem ID-Token und dem ersten Computersystem, wobei das zweite Modul mit einem ersten Modul der Telekommunikations-Chipkarte interoperabel ist, das erste Modul die Ausführung des zweiten Moduls initiiert und das zweite Modul durch Protokollumsetzung die geschützte Verbindung zum Auslesen von zumindest einem Attribut des ID-Tokens durch das erste Computersystem aufgebaut wird.

In einem weiteren Aspekt betrifft die Erfindung eine Telekommunikations-Chipkarte, der mindestens ein eindeutiger Identifikator zugeordnet ist, mit einem computer-lesbaren, nicht flüchtigen Speichermedium, einem Prozessor, einer Schnittstelle zum Empfang einer Nachricht von einem OTA-Server, einer weiteren Schnittstelle zum Aufbau eines ersten Datenkommunikations-Kanas mit einem Server-Computersystem, einer Schnittstelle zum Aufbau eines dritten Datenkommunikations-Kanas mit einem ID-Token, und mit einem ersten Modul zum Aufbau einer geschützten Verbindung zwischen dem ID-Token und einem ID-Provider-Computersystem in Zusammenarbeit mit einem zweiten Modul auf dem Server-Computersystem.

In einem weiteren Aspekt betrifft die Erfindung ein Mobilfunkgerät mit einer erfindungsgemäßen Telekommunikations-Chipkarte.

Ausführungsformen des erfindungsgemäßen ersten Computersystems sind besonders vorteilhaft, da sie in Kombination mit der Notwendigkeit der Authentifizierung des Nutzers gegenüber dem ID-Token einen Vertrauensanker für die unverfälschte digitale Identität des Nutzers bilden. Hierbei ist von besonderem Vorteil, dass dies keine vorherige Registrierung des Nutzers gegenüber dem Computersystem erfordert sowie auch keine zentrale Speicherung der die digitalen Identitäten bildenden Attribute der Nutzer.

Nach einer Ausführungsform der Erfindung empfängt das erste Computersystem zusammen mit der Attributspezifizierung einen Identifikator des zweiten Computersystems. Mit Hilfe des Identifikators identifiziert das Computersystem das zweite Computersystem, welches die Identifikationsdienste in Anspruch nehmen möchte, um diese Dienstleistung gegenüber dem zweiten Computersystem zu vergebühren.

Nach einer Ausführungsform der Erfindung handelt es sich bei dem Computersystem um ein behördlich zertifiziertes Trust-Center, insbesondere ein Signaturgesetzkonformes Trust-Center.

Die verschiedenen funktionellen Mittel der Computersysteme, der Telekommunikations-Chipkarte und/oder des ID-Token, wie zum Beispiels die Mittel zum Empfang, die Mittel zur Authentifizierung, die Mittel zum Lesen, die Mittel zur Generierung und/oder die Mittel zum Signieren können jeweils durch ein oder mehrere Prozessoren und durch Programminstruktionen realisiert werden, die in einem computer-lesbaren Speicher gespeichert und von dort zur Ausführung durch den oder die Prozessoren ausgelesen werden können. Ganz oder teilweise kann eine Realisierung der verschiedenen funktionellen Mittel auch schaltungstechnisch erfolgen. Ferner können die verschiedenen funktionellen Mittel auch durch voneinander räumlich getrennte Hardwareeinheiten realisiert werden, die über geeignete Kommunikationsverbindungen miteinander interoperieren.

Im Weiteren werden Ausführungsformen der Erfindung mit Bezugnahme auf die Zeichnungen näher erläutert. Es zeigen:
- Figur 1: ein Blockdiagramm einer ersten Ausführungsform erfindungsgemäßer Computersysteme,
- Figur 2: ein Flussdiagramm einer Ausführungsform eines erfindungsgemäßen Verfahrens,
- Figur 3: ein Flussdiagramm einer Ausführungsform eines erfindungsgemäßen Verfahrens zum Aufbau einer geschützten Verbindung zwischen dem ID-Token und dem ersten Computersystem,
- Figur 4: ein UML-Diagramm einer weiteren Ausführungsform eines erfindungsgemäßen Verfahrens.

Elemente der nachfolgenden Ausführungsformen, die einander entsprechen, werden mit denselben Bezugszeichen gekennzeichnet.

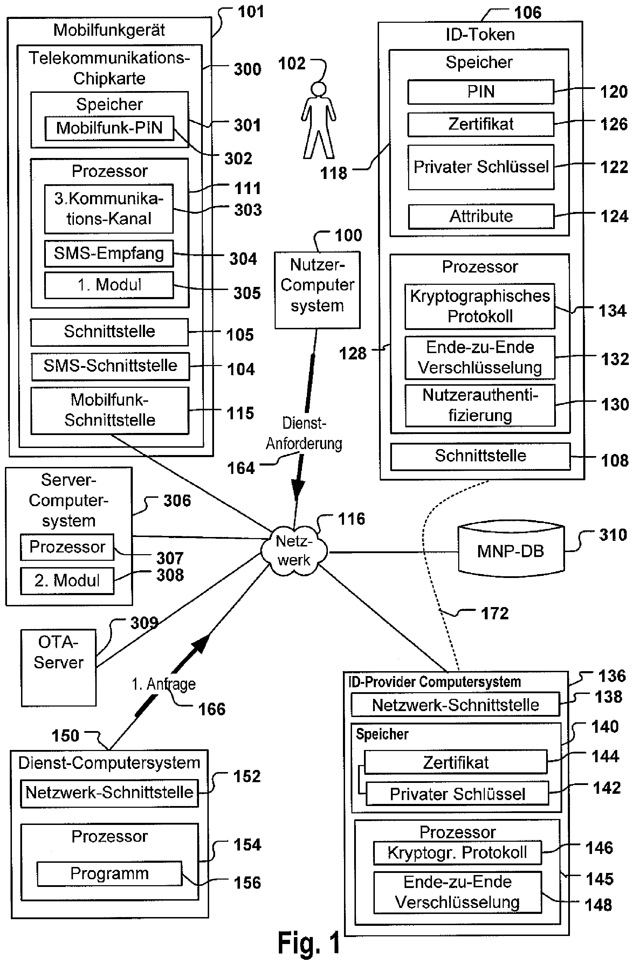

Die Figur 1 zeigt ein Nutzer-Computersystem 100 eines Nutzers 102. Bei dem Nutzer-Computersystem 100 kann es sich um einen Personalcomputer, einen tragbaren Computer, wie zum Beispiel einen Laptop oder Palmtop-Computer, einen Personal Digital Assistant, ein mobiles Telekommunikationsgerät, insbesondere ein Smart Phone, oder dergleichen handeln.

Das Nutzer-Computersystem 100 hat zumindest einen Prozessor zur Ausführung von Programminstruktionen sowie eine Netzwerk-Schnittstelle zur Kommunikation über ein Netzwerk 116. Bei dem Netzwerk 116 kann es sich um ein Computernetzwerk, wie zum Beispiel das Internet, handeln. Das Netzwerk 116 beinhaltet ein Mobilfunknetzwerk oder ist mit einem Mobilfunknetzwerk verbunden.

Das ID-Token 106 hat einen elektronischen Speicher 118 mit geschützten Speicherbereichen 120, 122 und 124. Der geschützte Speicherbereich 120 dient zur Speicherung eines Referenzwerts, der für die Authentifizierung des Nutzers 102 gegenüber dem ID-Token 106 benötigt wird. Bei diesem Referenzwert handelt es sich beispielsweise um eine so genannte Personal Identification Number (PIN), oder um Referenzdaten für ein biometrisches Merkmal des Nutzers 102, welches für die Authentifizierung des Nutzers gegenüber dem ID-Token 106 verwendet werden kann.

Der geschützte Bereich 122 dient zur Speicherung eines privaten Schlüssels und der geschützte Speicherbereich 124 dient zur Speicherung von Attributen, zum Beispiel des Nutzers 102, wie zum Beispiel dessen Name, Wohnort, Geburtsdatum, Geschlecht, und/oder von Attributen, die das ID-Token selbst betreffen, wie zum Beispiel die Institution, die das ID-Token erstellt oder ausgegeben hat, die Gültigkeitsdauer des ID-Tokens, einen Identifikator des ID-Tokens, wie zum Beispiel eine Passnummer oder eine Kreditkartennummer.

Der elektronische Speicher 118 kann ferner einen Speicherbereich 126 zur Speicherung eines Zertifikats aufweisen. Das Zertifikat beinhaltet einen öffentlichen Schlüssel, der dem in dem geschützten Speicherbereich 122 gespeicherten privaten Schlüssel zugeordnet ist. Das Zertifikat kann nach einem Public Key Infrastruktur (PKI) Standard erstellt worden sein, beispielsweise nach dem X.509 Standard.

Das Zertifikat muss nicht zwangsläufig in dem elektronischen Speicher 118 des ID-Tokens 106 gespeichert sein. Alternativ oder zusätzlich kann das Zertifikat auch in einem öffentlichen Verzeichnisserver gespeichert sein.

Das ID-Token 106 hat einen Prozessor 128. Der Prozessor 128 dient zur Ausführung von Programminstruktionen 130, 132 und 134. Die Programminstruktionen 130 dienen zur Nutzerauthentifizierung, d.h. zur Authentifizierung des Nutzers 102 gegenüber dem ID-Token.

Die Figur 1 zeigt ferner ein Mobilfunkgerät 101 des Nutzers 102. Bei dem Mobilfunkgerät 101 kann es sich zum Beispiel um ein Handy oder ein Smartphone handeln. Das Mobilfunkgerät 101 eine dem Nutzer 102 zugeordnete Telekommunikations-Chipkarte 300, zum Beispiel eine SIM-Karte. Die Telekommunikations-Chipkarte 300 besitzt eine Schnittstelle 105 zur Kommunikation mit der entsprechenden Schnittstelle 108 des ID-Tokens 106, wobei die Kommunikation zwischen der Schnittstelle 105 der Telekommunikations-Chipkarte 300 mit der Schnittstelle 108 des ID-Tokens 106 auch über ein oder mehrere Schnittstellen des Mobilfunkgerätes 101 ablaufen kann. Bei den Schnittstellen 105 und 108 kann es sich um Schnittstellen für eine sogenannte Nahfeldkommunikation handeln. Die Telekommunikations-Chipkarte verfügt ferner über eine Schnittstelle 104 zum Empfang einer Nachricht von einem OTA-Server. Typischerweise ist die Schnittstelle 104 als Schnittstelle zum Empfang von SMS Nachrichten ausgebildet.

Die Telekommunikations-Chipkarte 300 hat zumindest einen Prozessor 111 zur Ausführung von Programminstruktionen 303, 304, 305, sowie eine Mobilfunk-Schnittstelle 115 zur Kommunikation über das Netzwerk 116. Die Kommunikation über die Mobilfunk-Schnittstelle 115 der Telekommunikations-Chipkarte kann vermittels Schnittstellen des Mobilfunkgerätes 101 geschehen, in welches die Telekommunikations-Chipkarte integriert ist. Nach einer Ausführungsform kann sich der Nutzer bei der Telekommunikations-Chipkarte 300 durch Eingabe einer dem Nutzer 102 zugeordneten Mobilfunk-PIN über die Tastatur des Mobilfunkgerätes 101 bei der Telekommunikations-Chipkarte authentifizieren. Unter einer "Mobilfunk-PIN" wird im Folgenden insbesondere eine PIN verstanden, die dem Schutz vor unbefugter Nutzung einer Mobilfunkkarte durch Dritte dient, und welche insbesondere beim Anschalten und Entsperren eines Mobilfunkgerätes von dem Nutzer einzugeben ist, um das Mobilfunkgerät für den Betrieb freizuschalten. Die eingegebene Mobilfunk-PIN wird dabei mit einem in einem computer-lesbaren Speicher 301 der Telekommunikations-Chipkarte hinterlegten Referenzwertes 302 abgeglichen.

### Authentifizierung des Nutzers bei dem ID-Token:

Bei einer Ausführungsform eines erfindungsgemäßen ID Tokens mit ID-Token-PIN, im Folgenden kurz "PIN" genannt, gibt der Nutzer 102 seine PIN zu seiner Authentifizierung in das ID-Token 106 ein, beispielsweise über das Mobilfunkgerät 101. Die ID-Token-PIN (PIN) unterscheidet sich von der oben beschriebenen Mobilfunk-PIN insbesondere dadurch, dass die ID-Token PIN dem Schutz des ID-Tokens vor unbefugter Nutzung durch Dritte dient, während die Mobilfunk-PIN dem Schutz der Mobilfunkkarte vor unberechtigtem Zugriff durch Dritte dient. Die Tastatur des Mobilfunkgeräts kann gemäß Ausführungsformen der Erfindung zwar dazu dienen, dem Nutzer die Eingabe der ID-Token-PIN zu ermöglichen, die Überprüfung der Gültigkeit der ID-Token-PIN wird jedoch durch das ID-Token vorgenommen, nicht durch das Mobilfunkgerät. Beispielsweise gibt der Nutzer 102 seine PIN über eine Tastatur des Mobilfunkgeräts 101 ein; die PIN wird dann von dem Mobilfunkgerät 101 über die Schnittstelle 105 zu dem ID-Token 106 übertragen.

Durch Ausführung der Programminstruktionen 130 wird dann von dem ID-Token 106 auf den geschützten Speicherbereich 120 zugegriffen, um die eingegebene PIN mit dem dort gespeicherten Referenzwert der PIN zu vergleichen. Für den Fall, dass die eingegebene PIN mit dem Referenzwert der PIN übereinstimmt, gilt der Nutzer 102 als authentifiziert.

Alternativ wird ein biometrisches Merkmal des Nutzers 102 erfasst. Beispielsweise hat das ID-Token 106 hierzu einen Fingerabdrucksensor oder ein Fingerabdrucksensor ist an das Mobilfunkgerät 101 angeschlossen oder darin integriert. Die von dem Nutzer 102 erfassten biometrischen Daten werden durch Ausführung der Programminstruktionen 130 bei dieser Ausführungsform mit den in dem geschützten Speicherbereich 120 gespeicherten biometrischen Referenzdaten verglichen. Bei hinreichender Übereinstimmung der von dem Nutzer 102 erfassten biometrischen Daten mit den biometrischen Referenzdaten gilt der Nutzer 102 als authentifiziert.

Die Programminstruktionen 134 dienen zur Ausführung der das ID-Token 106 betreffenden Schritte eines kryptographischen Protokolls zur Authentifizierung eines ID-Provider-Computersystems 136 gegenüber dem ID-Token 106. Bei dem kryptographischen Protokoll kann es sich um ein Challenge-Response-Protokoll basierend auf einem symmetrischen Schlüssel oder einem asymmetrischen Schlüsselpaar handeln.

Beispielsweise wird durch das kryptographische Protokoll ein Extended Access Control-Verfahren implementiert, wie es für maschinenlesbare Reisedokumente (machine-readable travel documents - MRTD) von der internationalen Luftfahrtbehörde (ICAO) spezifiziert ist. Durch erfolgreiche Ausführung des kryptographischen Protokolls authentifiziert sich das ID-Provider-Computersystem 136 gegenüber dem ID-Token und weist dadurch seine Leseberechtigung zum Lesen der in dem geschützten Speicherbereich 124 gespeicherten Attribute nach. Die Authentifizierung kann auch gegenseitig sein, d.h. auch das ID-Token 106 muss sich dann gegenüber dem ID-Provider-Computersystem 136 nach demselben oder einem anderen kryptographischen Protokoll authentifizieren.

Die Programminstruktionen 132 dienen zur Ende-zu-Ende-Verschlüsselung von zwischen dem ID-Token 106 und dem ID-Provider-Computersystem 136 übertragenen Daten, zumindest aber der von dem ID-Provider-Computersystem 136 aus dem geschützten Speicherbereich 124 ausgelesenen Attribute. Für die Ende-zu-Ende-Verschlüsselung kann ein symmetrischer Schlüssel verwendet werden, der beispielsweise anlässlich der Ausführung des kryptographischen Protokolls zwischen dem ID-Token 106 und dem ID-Provider-Computersystem 136 vereinbart wird. Beispielsweise überträgt das ID-Provider-Computersystem 136 sein Zertifikat 144 über diese Verbindung 172 an das ID-Token 106. Durch die Programminstruktionen 134 wird dann eine so genannte Challenge generiert, d.h. beispielsweise eine Zufallszahl. Diese Zufallszahl wird mit dem in dem Zertifikat 144 beinhalteten öffentlichen Schlüssel des ID-Provider-Computersystems 136 verschlüsselt. Das resultierende Chiffrat wird von dem ID-Token 106 über die Verbindung 172 an das ID-Provider-Computersystem 136 gesendet. Das ID-Provider-Computersystem 136 entschlüsselt das Chiffrat mit Hilfe seines privaten Schlüssels 142 und erhält so die Zufallszahl. Die Zufallszahl sendet das ID-Provider-Computersystem 136 über die Verbindung 172 an das ID-Token 106 zurück. Durch Ausführung der Programminstruktionen 134 wird dort geprüft, ob die von dem ID-Provider-Computersystem 136 empfangene Zufallszahl mit der ursprünglich generierten Zufallszahl, d.h. der Challenge, übereinstimmt. Ist dies der Fall, so gilt das ID-Provider-Computersystem 136 als gegenüber dem ID-Token 106 authentifiziert. Die Zufallszahl kann als symmetrischer Schlüssel für die Ende-zu-Ende Verschlüsselung verwendet werden.

Das ID-Provider-Computersystem 136 hat eine Netzwerk-Schnittstelle 138 zur Kommunikation über das Netzwerk 116. Das ID-Provider-Computersystem 136 hat ferner einen Speicher 140, in dem ein privater Schlüssel 142 des ID-Provider-Computersystems 136 sowie das entsprechende Zertifikat 144 gespeichert sind. Auch bei diesem Zertifikat kann es sich beispielsweise um ein Zertifikat nach einem PKI-Standard, wie zum Beispiel X.509 handeln.

Das ID-Provider-Computersystem 136 hat ferner zumindest einen Prozessor 145 zur Ausführung von Programminstruktionen 146 und 148. Durch Ausführung der Programminstruktionen 146 werden die das ID-Provider-Computersystem 136 betreffende Schritte des kryptographischen Protokolls ausgeführt. Insgesamt wird also das kryptographische Protokoll durch Ausführung der Programminstruktionen 134 durch den Prozessor 128 des ID-Tokens 106 sowie durch Ausführung der Programminstruktionen 146 durch den Prozessor 145 des ID-Provider-Computersystems 136 implementiert.

Die Programminstruktionen 148 dienen zur Implementierung der Ende-zu-Ende-Verschlüsselung auf Seiten des ID-Provider-Computersystems 136, beispielsweise basierend auf dem symmetrischen Schlüssel, der anlässlich der Ausführung des kryptographischen Protokolls zwischen dem ID-Token 106 und dem ID-Provider-Computersystem 136 vereinbart worden ist. Prinzipiell kann jedes an sich vor bekannte Verfahren zur Vereinbarung des symmetrischen Schlüssels für die Ende-zu-Ende-Verschlüsselung verwendet werden, wie zum Beispiel ein Diffie-Hellman-Schlüsselaustausch.

Das ID-Provider-Computersystem 136 befindet sich vorzugsweise in einer besonders geschützten Umgebung, insbesondere in einem so genannten Trust-Center, sodass das ID-Provider-Computersystem 136 in Kombination mit der Notwendigkeit der Authentifizierung des Nutzers 102 gegenüber dem ID-Token 106 den Vertrauensanker für die Authentizität der aus dem ID-Token 106 ausgelesenen Attribute bildet.

Ein Dienst-Computersystem 150 kann zur Entgegennahme einer Bestellung oder eines Auftrags für eine Dienstleistung oder ein Produkt, insbesondere eine Online-Dienstleistung, ausgebildet sein. Beispielsweise kann der Nutzer 102 online über das Netzwerk 116 ein Konto bei einer Bank eröffnen oder eine andere Finanz- oder Bankdienstleistung in Anspruch nehmen. Das Dienst-Computersystem 150 kann auch als Online-Warenhaus ausgebildet sein, sodass der Benutzer 102 beispielsweise online ein Mobiltelefon oder dergleichen erwerben kann. Ferner kann das Dienst-Computersystem 150 auch zur Lieferung von digitalen Inhalten ausgebildet sein, beispielsweise für den Download von Musik- und/oder Videodaten.

Das Dienst-Computersystem 150 hat hierzu eine Netzwerk-Schnittstelle 152 zur Verbindung mit dem Netzwerk 116. Ferner hat das Dienst-Computersystem 150 zumindest einen Prozessor 154 zur Ausführung von Programminstruktionen 156. Durch Ausführung der Programminstruktionen 156 werden beispielsweise dynamische HTML-Seiten generiert, über die der Nutzer 102 seinen Auftrag oder seine Bestellung eingeben kann.

Je nach der Art des beauftragten oder bestellten Produkts oder der Dienstleistung muss das Dienst-Computersystem 150 ein oder mehrere Attribute des Nutzers 102 und/oder dessen ID-Token 106 anhand eines oder mehrerer vorgegebener Kriterien überprüfen. Nur wenn diese Prüfung bestanden wird, wird die Bestellung oder der Auftrag des Nutzers 102 entgegengenommen und/oder ausgeführt.

Beispielsweise ist es für die Eröffnung eines Bankkontos oder den Kauf eines Mobiltelefons mit einem dazugehörigen Vertrag erforderlich, dass der Nutzer 102 seine Identität gegenüber dem Dienst-Computersystem 150 offenbart, und dass diese Identität überprüft wird. Im Stand der Technik muss der Nutzer 102 hierzu beispielsweise seinen Personalausweis vorlegen. Dieser Vorgang wird durch das Auslesen der digitalen Identität des Nutzers 102 aus seinem ID-Token 106 ersetzt.

Je nach Anwendungsfall muss der Nutzer 102 aber nicht seine Identität gegenüber dem Dienst-Computersystem 150 offenbaren, sondern es reicht die Mitteilung, zum Beispiel nur eines der Attribute aus. Beispielsweise kann der Nutzer 102 über eines der Attribute einen Nachweis erbringen, dass er zu einer bestimmten Personengruppe gehört, die zugangsberechtigt für auf dem Dienst-Computersystem 150 zum Download bereitgehaltene Daten ist. Beispielsweise kann ein solches Kriterium ein Mindestalter des Nutzers 102 sein oder die Zugehörigkeit des Nutzers 102 zu einem Personenkreis, der auf bestimmte vertrauliche Daten eine Zugriffsberechtigung hat.

Zur Inanspruchnahme des von dem Dienst-Computersystem 150 zur Verfügung gestellten Dienstes wird beispielsweise wie folgt vorgegangen:
1. Authentifizierung des Nutzers 102 gegenüber dem ID-Token 106.
   Der Nutzer 102 authentifiziert sich gegenüber dem ID-Token 106. Bei einer Implementierung mit PIN gibt der Nutzer 102 hierzu seine PIN beispielsweise über das Nutzer-Computersystem 100 oder das Mobilfunkgerät 101 in das ID-Token 106 ein. Durch Ausführung der Programminstruktionen 130 prüft dann das ID-Token 106 die Korrektheit der eingegebenen PIN. Wenn die eingegebene PIN mit dem in dem geschützten Speicherbereich 120 gespeicherten Referenzwert der PIN übereinstimmt, so gilt der Nutzer 102 als authentifiziert. Analog kann vorgegangen werden, wenn ein biometrisches Merkmal des Nutzers 102 zu dessen Authentifizierung verwendet wird, wie oben beschrieben.
2. Authentifizierung des ID-Provider-Computersystems 136 gegenüber dem ID-Token 106.
   Hierzu wird eine geschützte Verbindung 172 zwischen dem ID-Token 106 und dem ID-Provider-Computersystem 136 hergestellt. Der Aufbau der geschützten Verbindung, welche zum Auslesen von ein oder mehreren Attributen aus dem Speicher 124 des ID-Tokens 106 erforderlich ist, wird durch ein erstes Modul der Telekommunikations-Chipkarte 300 in Zusammenarbeit mit einem zweiten Modul des Server-Computersystems 306 vermittelt. Die Telekommunikations-Chipkarte 300 ist also nicht alleine für den Aufbau der geschützten Verbindung verantwortlich. Vielmehr wird die geschützte Verbindung durch die Interaktion des ersten mit dem zweiten Modul vermittelt. Der genaue Ablauf des Aufbaus der geschützten Verbindung mittels der Telekommunikations-Chipkarte und das Server-Computersystems gemäß Ausführungsformen der vorliegenden Erfindung wird an späterer Stelle erläutert.
3. Nachdem sich der Nutzer 102 erfolgreich gegenüber dem ID-Token 106 authentifiziert hat, und nachdem sich das ID-Provider-Computersystem 136 erfolgreich gegenüber dem ID-Token 106 authentifiziert hat, erhält das ID-Provider-Computersystem 136 eine Leseberechtigung zum Auslesen, eines, mehrerer oder aller der in dem geschützten Speicherbereich 124 gespeicherten Attribute. Aufgrund eines entsprechenden Lesekommandos, welches das ID-Provider-Computersystem 136 über die Verbindung 172 an das ID-Token 106 sendet, werden die angeforderten Attribute aus dem geschützten Speicherbereich 124 ausgelesen und durch Ausführung der Programminstruktionen 132 verschlüsselt. Die verschlüsselten Attribute werden über die Verbindung 172 an das ID-Provider-Computersystem 136 übertragen und dort durch Ausführung der Programminstruktionen 148 entschlüsselt. Dadurch erhält das ID-Provider-Computersystem 136 Kenntnis der aus dem ID-Token 106 ausgelesenen Attribute.
   Diese Attribute werden von dem ID-Provider-Computersystem mit Hilfe seines Zertifikats 144 signiert und über das Nutzer-Computersystem 100 oder direkt an das Dienst-Computersystem 150 übertragen. Dadurch wird das Dienst-Computersystem 150 über die aus dem ID-Token 106 ausgelesenen Attribute in Kenntnis gesetzt, sodass das Dienst-Computersystem 150 diese Attribute anhand der vorgegebenen ein oder mehreren Kriterien prüfen kann, um danach ggf. den von dem Benutzer 102 angeforderten Dienst zu erbringen.

Durch die Notwendigkeit der Authentifizierung des Nutzers 102 gegenüber dem ID-Token 106 und der Authentifizierung des ID-Provider-Computersystems 136 gegenüber dem ID-Token 106 ist der notwendige Vertrauensanker geschaffen, sodass das Dienst-Computersystem 150 sicher sein kann, dass die ihm von dem ID-Provider-Computersystem 136 mitgeteilten Attribute des Nutzers 102 zutreffend und nicht verfälscht sind.

Je nach Ausführungsform kann die Reihenfolge der Authentifizierung unterschiedlich sein. Beispielsweise kann vorgesehen sein, dass sich zunächst der Nutzer 102 gegenüber dem ID-Token 106 authentifizieren muss und nachfolgend das ID-Provider-Computersystem 136. Es ist aber grundsätzlich auch möglich, dass sich zunächst das ID-Provider-Computersystem 136 gegenüber dem ID-Token 106 authentifizieren muss und erst nachfolgend der Nutzer 102.

In dem ersten Fall ist das ID-Token 106 beispielsweise so ausgebildet, dass es nur durch Eingabe einer korrekten PIN oder eines korrekten biometrischen Merkmals durch den Nutzer 102 freigeschaltet wird. Erst diese Freischaltung ermöglicht den Start der Programminstruktionen 132 und 134 und damit die Authentifizierung des ID-Provider-Computersystems 136.

Im zweiten Fall ist ein Start der Programminstruktionen 132 und 134 auch bereits möglich, wenn sich der Nutzer 102 noch nicht gegenüber dem ID-Token 106 authentifiziert hat. In diesem Fall sind beispielsweise die Programminstruktionen 134 so ausgebildet, dass das ID-Provider-Computersystem 136 erst dann einen Lesezugriff auf den geschützten Speicherbereich 124 zum Auslesen eines oder mehrerer der Attribute durchführen kann, nachdem von den Programminstruktionen 130 die erfolgreiche Authentifizierung auch des Nutzers 102 signalisiert worden ist.

Von besonderem Vorteil ist die Nutzbarmachung des ID-Tokens 106 für zum Beispiel E-Commerce und E-Government-Anwendungen, und zwar medienbruchfrei und rechtssicher aufgrund des durch die Notwendigkeit der Authentifizierung des Nutzers 102 und des ID-Provider-Computersystems 136 gegenüber dem ID-Token 106 gebildeten Vertrauensankers. Von besonderem Vorteil ist ferner, dass eine zentrale Speicherung der Attribute verschiedener Nutzer 102 nicht erforderlich ist, sodass die im Stand der Technik bestehenden Datenschutzprobleme hiermit gelöst sind. Was die Bequemlichkeit der Anwendung des Verfahrens betrifft, ist von besonderem Vorteil, dass eine vorherige Registrierung des Nutzers 102 zur Inanspruchnahme des ID-Provider-Computersystems 136 nicht erforderlich ist.

Um einen oder mehrere Attribute aus einem ID-Token mittels eines erfindungsgemäßen Verfahrens durch ein erstes Computersystem auszulesen, wird beispielsweise wie folgt vorgegangen:
Zunächst wird von dem Nutzer-Computersystem 100 eine Dienst-Anforderung 164 über das Netzwerk 116 an das Dienst-Computersystem 150 gesendet. Die Dienst-Anforderung beinhaltet neben der Spezifikation des zumindest einen auszulesenden Attribute auch den Identifikator der Telekommunikations-Chipkarte 300, welche den Nutzer 102 zugeordnet ist. Die Dienst-Anforderung kann auch weitere Nutzer-Angaben enthalten. Die Eingabe und Übermittlung der Angaben sowie des Identifikators können zum Beispiel wie zuvor beschriebenen über das HTTP-GET Verfahren an das Dienst-Computersystem 150 übermittelt werden. So kann zum Beispiel zwischen dem Nutzer-Computersystem 100 und dem ID-Provider-Computersystem 136 über das Netzwerk 116 eine Dienst-Anforderung 164 dadurch spezifiziert und gesendet werden, indem der Nutzer 102 in ein Browser-Programm des Nutzer-Computersystems 100 die URL des ID-Provider-Computersystems 136 eingibt und weitere, dienstspezifische Daten sowie den Identifikator der ihm zugeordneten Telekommunikations-Chipkarte z.B. in Felder eines in dem Browser dargestellten und vom Dienst-Computersystem angebotenen HTML-Formulars eingibt. Nach z.B. einem Klick auf den "Submit"-Button des HTML Formulars werden die spezifizierten Daten von dem Nutzer-Computersystem 100 an das ID-Provider-Computersystem 136 als Dienst-Anforderung 164 gesendet.

Das Dienst-Computersystem 150 sendet nach Erhalt der Dienst-Anforderung 164 eine erste Anfrage 166 an das ID-Provider-Computersystem 136 über das Netzwerk 116. Die erste Anfrage spezifiziert das zumindest eine, auszulesende Attribut sowie den Identifikator der Telekommunikations-Chipkarte 300. Die erste Anfrage 166 kann ferner Daten beinhalten, die das ID-Provider-Computersystem 136 nach dem Auslesen der Attribute aus dem ID-Token in die Lage versetzen, die ausgelesenen Attribute an das Dienst-Computersystem 51 zu übermitteln 319.

Das ID-Provider Computersystem kann die erhaltenen Daten in einem geeigneten Speicherbereich ablegen, so dass es nach auslesen der Attribute aus dem ID-Token in der Lage ist, diese Daten an das anfragende Dienst-Computersystem 150 zu übermitteln. Beispielsweise können die Daten der ersten Anfrage 166 in Assoziation mit der IP-Adresse und einem Session-Key des Dienst-Computersystems 150 gespeichert werden.

Nach Erhalt der ersten Anfrage spezifiziert und sendet das ID-Provider-Computersystem 136 eine zweite Anfrage, auch "MNP-Anfrage" genannt, an eine MNP-Datenbank 310 oder an einen MNP-Datenbank Server. Die zweite Anfrage beinhaltet zumindest den Identifikator der Telekommunikations-Chipkarte 300. Die MNP-Datenbank ermöglicht es, den Identifikator, z.B. die vollständige Mobilfunkrufnummer der Telekommunikations-Chipkarte, einem Mobilfunknetz-Provider eindeutig zuzuordnen. Für den Fall dass nicht die vollständige Mobilfunknummer sondern zum Beispiel die IMSI Nummer oder ein anderer Identifikator der Telekommunikations-Chipkarte verwendet wird, wird die zweite Anfrage an einen geeigneten anderen Server gesendet, welcher in der Lage ist, den übermittelten Identifikator eindeutig einem bestimmten Mobilfunknetz-Provider zuzuordnen. Im Folgenden werden alle Server, Datenbanken und/oder Datenbankserver, welche in der Lage sind, dem Identifikator einer Telekommunikations-Chipkarte eindeutig dem aktuell für die Abrechnungen der Telekommunikationsverbindungen zuständigen Mobilfunknetz-Provider zuzuordnen, als MNP-Datenbanken bezeichnet.

Die MNP-Datenbank ermittelt also den aktuell für die den Identifikator zugeordnete Telekommunikations-Chipkarte zuständigen Mobilfunknetz-Provider und übermittelt dessen Identität in einer ersten Antwort 312 an das anfragende ID-Provider-Computersystem 136.

Das ID-Provider-Computersystem 136 sendet nun eine dritte Anfrage 313, auch als "Auslese-Anfrage" bezeichnet, an den OTA-Server 309 des übermittelten Mobilfunknetz-Providers. Die dritte Anfrage enthält zumindest den Identifikator der Telekommunikations-Chipkarte 300, so dass der OTA-Server in die Lage versetzt wird, eine Nachricht 314, zum Beispiel in Form einer technischen SMS, die die Ausführung von Funktionen triggern kann und auch als "Trigger-SMS" bezeichnet wird, gezielt an die durch den Identifikator identifizierte Telekommunikations-Chipkarte 300 zu senden. Die Nachricht 314 beinhaltet ein Kommando zum Aufbau 315 eines ersten Datenkommunikations-Kanas zwischen der Telekommunikations-Chipkarte 300 und dem Server-Computersystem 306. Der Aufbau des ersten Datenkommunikations-Kanas wird dabei durch ein erstes Modul 305 der Telekommunikations-Chipkarte initiiert. Für den vollständigen Aufbau des ersten Datenkommunikations-Kanas ist jedoch nach Ausführungsformen der Erfindung eine koordinierte Interaktion des ersten Moduls mit einem mit diesem Modul interoperablen zweiten Modul 308 auf dem Server-Computersystem 306 erforderlich. Gemäß bevorzugten Ausführungsformen ist das erste Modul ein auf den Speicher 301 gespeichertes Softwaremodul.

Das Server-Computersystem 306 beinhaltet zumindest einen Prozessor 307 zur Ausführung computer-interpretierbare Instruktionen, die auf einem Computer-lesbaren Speichermedium gespeichert sind. Auf diesem Speichermedium ist ein zweites Modul 308 gespeichert, wobei gemäß mancher Ausführungsformen der Erfindung das zweite Modul oder Teile davon auch als Hardware oder Firmware implementiert sein können.

Nach erfolgreicher Aufbau 315 des ersten Datenkommunikations-Kanas durch das erste und zweite Modul kann nun der Aufbau 316 eines zweiten Datenkommunikations-Kanas zwischen dem Server-Computersystem 306 und dem ID-Provider-Computersystem 136 durch das zweite Modul initiiert werden.

Das erste Modul 305 auf der Telekommunikations-Chipkarte 300 initiiert den Aufbau 317 eines dritten Datenkommunikations-Kanas zwischen der Telekommunikations-Chipkarte und dem ID-Token 106. Der dritte Datenkommunikations-Kanal kann je nach Ausführungsform der Erfindung zum Beispiel auf einem Challenge-Response-Protokoll, auf einem Extended Access Control Protokoll, auf einen PACE-Protokoll, dem BAC-Protokoll oder anderen Protokollen beruhen. Nach Ausführungsformen der Erfindung ist auf Seiten des ID-Tokens 106 zur Erstellung des dritten Datenkommunikations-Kanas also die Ausführung von ein oder mehreren kryptographisehen Protokollen 134 durch den Prozessor 128 notwendig.

Nach Ausführungsformen der Erfindung wird durch eine Protokollumsetzung durch das zweite Modul des Server-Computersystems 306 eine geschützte Verbindung 172 aufgebaut. Nach Aufbau der geschützten Verbindung 172 zwischen dem ID-Token 106 und dem ID-Provider-Computersystem 136 kann das in der ersten Anfrage 166 spezifizierte zumindest eine Attribut von dem ID-Token 106 ausgelesenen und anderes ID-Provider-Computersystem 136 in einer übermittelt werden 318.

Nachdem das ID-Provider-Computersystem 136 die in der ersten Anfrage spezifizierten Attribute von dem ID-Token 106 über die geschützte Verbindung 172 empfangen hat, so signiert es diese Attribute mit Hilfe seines Zertifikats 144.

Daraufhin sendet das ID-Provider-Computersystem 136 eine Antwort 319 über das Netzwerk 116 an das Dienst-Computersystem 150, wobei die Antwort die ausgelesenen Attribute und deren Signatur beinhaltet. Das Dienst-Computersystem erhält somit in vertrauenswürdiger Art und Weise von den in der ersten Anfrage 166 spezifizierten Attributen Kenntnis und kann den in der Dienst-Anforderung 164 spezifizierten Dienst erbringen.

Von dem Dienst-Computersystem 150 kann die Antwort ggf. auch an das Nutzer-Computersystem 100 weitergeleitet werden.

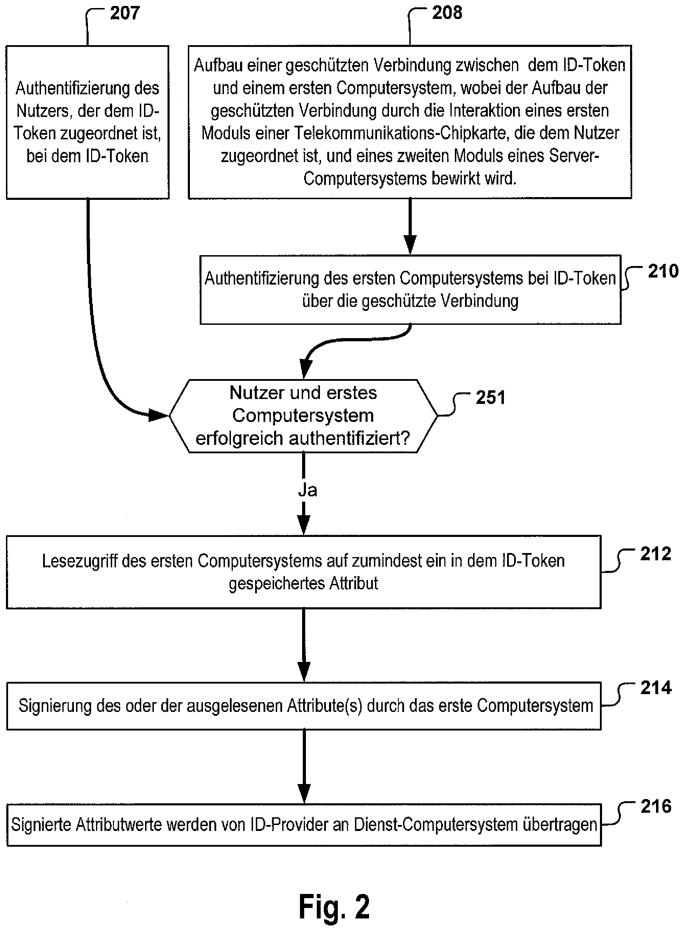

Die Figur 2 zeigt eine Ausführungsform eines erfindungsgemäßen Verfahrens.

Um dem ID-Provider-Computersystem die Möglichkeit zu geben, Attribute aus seinem ID-Token auszulesen, authentifiziert sich der Nutzer in dem Schritt 207 gegenüber dem ID-Token.

Im Schritt 208 erfolgt der Aufbau einer geschützten Verbindung zwischen dem ID-Token 106 und den ID-Provider-Computersystem 136. Der Aufbau der geschützten Verbindung erfolgt durch die Interaktion eines ersten Moduls 305 der Telekommunikations-Chipkarte 300, die dem Nutzer 102 zugeordnet ist, und eines zweiten Modul des 308 eines Server-Computersystems 306. Gemäß bevorzugter Ausführungsformen der Erfindung beinhaltet dabei das erste Modul vor allem Instruktionen zum Aufbau des ersten und dritten Datenkommunikations-Kanas sowie zur Protokollumsetzung der für die Datenübertragung auf den ersten, zweiten, und drittem Datenkommunikation-Kanälen verwendeten Protokolle. Das erste Modul beinhaltet dabei im Wesentlichen Instruktionen für basale I/O Operationen, während übergeordnete, komplexe und hinsichtlich der benötigten Ressourcen anspruchsvollere Programmoperationen zur Datenkommunikation durch das zweite Modul bereitgestellt werden. Da das zweite Modul durch den Prozessor des Server-Computersystems ausgeführt wird, stehen dem zweiten Modul i.d.R. eine höhere Rechenleistung bzw. ein größerer Arbeitsspeicher zur Verfügung als den Instruktionen des ersten Moduls.

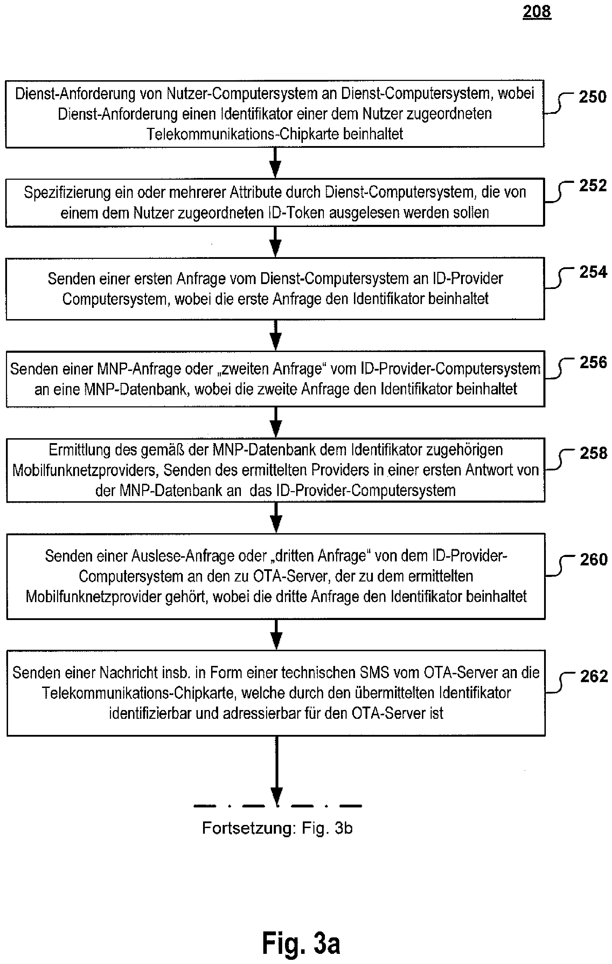

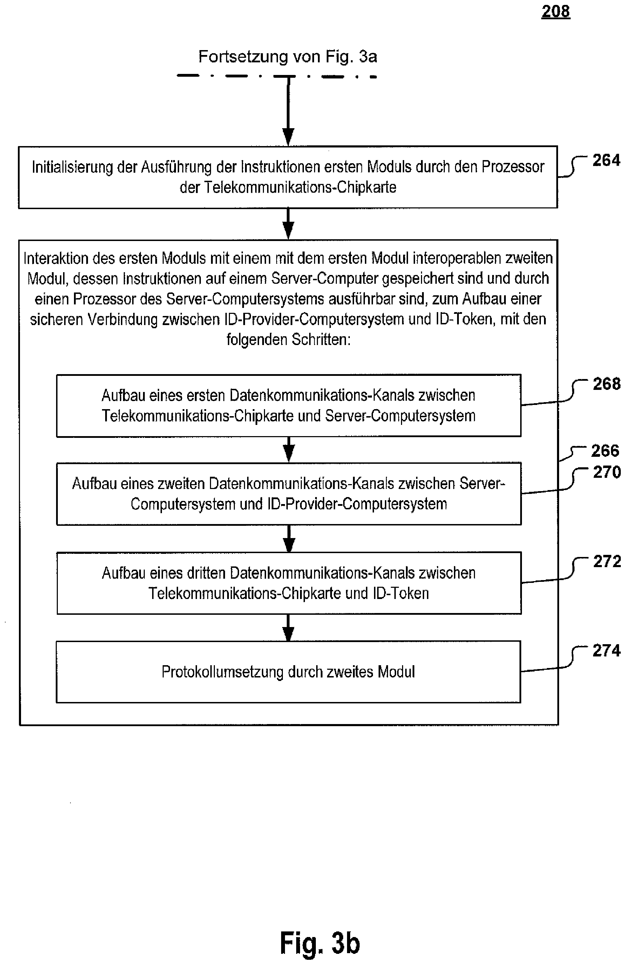

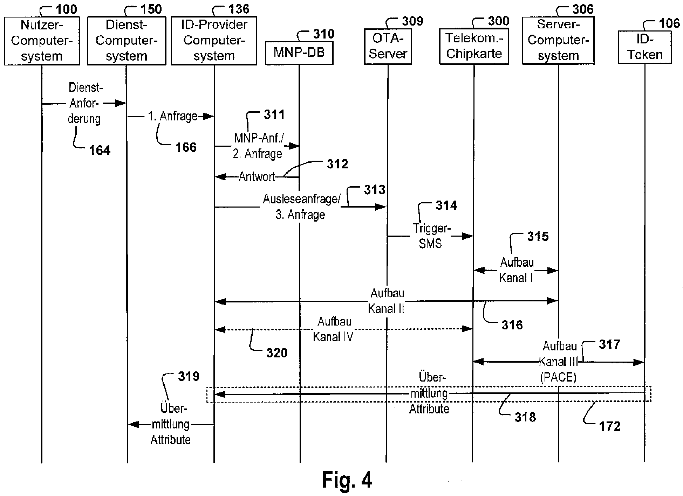

In dem Schritt 208 wird also eine geschützte Verbindung zwischen dem ID-Token und dem ID-Provider-Computersystem aufgebaut (vgl. Verbindung 172 in Fig. 1 und 4). Wie der Aufbau der geschützten Verbindung im Detail erfolgen kann ist in Figur 3 im Detail dargestellt. Bei der geschützten Verbindung handelt es sich vorzugsweise um eine Verbindung mit Ende-zu-Ende-Verschlüsselung, beispielsweise nach einem so genannten Secure Messaging-Verfahren.

In dem Schritt 210 erfolgt zumindest eine Authentifizierung des ID-Provider-Computersystems, auch "erstes Computersystem" genannt, gegenüber dem ID-Token über die in dem Schritt 208 aufgebaute geschützte Verbindung. Zusätzlich kann eine Authentifizierung auch des ID-Tokens gegenüber dem ID-Provider-Computersystem vorgesehen sein.

Nachdem sowohl der Nutzer als auch das ID-Provider-Computersystem erfolgreich gegenüber dem ID-Token authentifiziert worden sind, was in Schritt 251 geprüft wird, erhält das ID-Provider-Computersystem von dem ID-Token die Zugriffsberechtigung zum Auslesen der Attribute.

In dem Schritt 212 sendet das ID-Provider-Computersystem ein oder mehrere Lesekommandos zum Auslesen der gemäß Attributspezifizierung erforderlichen Attribute aus dem ID-Token. Die Attribute werden dann beispielsweise mittels Ende-zu-Ende-Verschlüsselung über die geschützte Verbindung an das ID-Provider-Computersystem übertragen und dort entschlüsselt.

Die ausgelesenen Attributwerte werden in dem Schritt 214 von dem ID-Provider-Computersystem signiert.

In dem Schritt 216 sendet das ID-Provider-Computersystem die signierten Attributwerte über das Netzwerk an das Dienst-Computersystem 150.

Die Figur 3 zeigt eine Reihe von Teil-Schritten 250-272 des in Figur 2 dargestellten Schrittes 208 gemäß einer Ausführungsform des erfindungsgemäßen Verfahrens im Detail.

Nach Ausführungsformen der Erfindung beinhaltet der Schritt 208 die folgenden Teilschritte:
In dem Schritt 250 wird eine Dienst-Anforderung 164 von dem Nutzer-Computersystem 100 an das Dienst-Computersystem 150 gesendet. Beispielsweise startet der Nutzer 102 hierzu einen Internet-Browser des Nutzer-Computersystems und gibt eine URL zum Aufruf einer Webseite des Dienst-Computersystems ein. In die aufgerufene Webseite gibt der Nutzer dann seine Dienst-Anforderung 164 ein, zum Beispiel zur Bestellung oder Auftragserteilung für einen Dienst oder ein Produkt. Die Dienstanforderung 164 beinhaltet dabei zumindest einen Identifikator einer dem Nutzer 102 zugeordneten Telekommunikations-Chipkarte 300.

In dem Schritt 252 spezifiziert das Dienst-Computersystem 150 daraufhin ein oder mehrere Attribute, welche es benötigt, um die Berechtigung des Nutzers für die Dienst-Anforderung zu prüfen. Insbesondere kann das Dienst-Computersystem solche Attribute spezifizieren, welche die digitale Identität des Nutzers 102 bestimmen. Diese Spezifizierung der Attribute durch das Dienst-Computersystem 150 kann fest vorgegeben sein oder je nach der Dienst-Anforderung im Einzelfall durch das Dienst-Computersystem 150 anhand vorgegebener Regeln bestimmt werden.

In dem Schritt 254 werden die in dem Schritt 252 spezifizierten ein oder mehreren vom ID-Token auszulesenden Attribute von dem Dienst-Computersystem an das ID-Provider-Computersystem in Form einer ersten Anfrage 166 übertragen. Die erste Anfrage beinhaltet dabei zumindest den Identifikator der dem Nutzer 102 zugeordneten Telekommunikations-Chipkarte 300. Gemäß weiterer Ausführungsformen ist es möglich, dass dem ID-Provider-Computersystem 136 im Zuge der ersten Anfrage weitere Daten, zum Beispiel die IP-Adresse und einen Session-Key des Dienst-Computersystems, mitgeteilt werden, so dass das ID-Provider-Computersystem nach dem Auslesen der Attribute in der Lage ist, diese an das anfragende Dienst-Computersystem 150 zu übersenden.

Im Schritt 256 wird eine MNP-Anfrage, auch "zweite Anfrage" genannt, von dem ID-Provider-Computersystem 136 an eine MNP-Datenbank 310 gesendet, wobei die zweite Anfrage zumindest den identifikator der Telekommunikations-Chipkarte 300 beinhaltet.

Im Schritt 258 ermittelt die MNP-Datenbank den für die Mobilfunknetz-Datenübertragung zu der durch den Identifikator identifizierten Telekommunikations-Chipkarte 300 zuständigen Mobilfunknetz-Provider. Die MNP-Datenbank beinhaltet ein eindeutiges Mapping eines für eine Telekommunikations-Chipkarte eindeutigen Identifikators, insbesondere einer vollständigen Mobilfunkrufnummer, zu dem aktuell zuständigen Mobilfunknetz-Provider. Der ermittelte Provider wird dem anfragenden ID-Provider-Computersystem 136 in einer ersten Antwort 312 mitgeteilt.

Mobilfunknetz-Provider verfügen über OTA-Server, über welche sie neue Softwareapplikationen und Dienste auf den durch sie herausgegebenen beziehungsweise verwalteten Telekommunikations-Chipkarten installieren beziehungsweise bereits installierte Applikationen updaten und warten können.

Im Schritt 260 sendet das ID-Provider-Computersystem 316 eine Auslese-Anfrage, auch "dritte Anfrage" genannt an den OTA-Server des ermittelten Mobilfunknetz-Providers. Die dritte Anfrage beinhaltet zumindest den Identifikator der Telekommunikations-Chipkarte 300.

Nach Empfang der Auslese-Anfrage sendet der OTA-Server in Schritt 262 eine Nachricht an die Telekommunikations-Chipkarte, welche durch den übermittelten Identifikator eindeutig identifizierbar und adressierbar für den OTA-Server ist. Die Nachricht wird insbesondere in Form einer oder mehrerer technischer SMS an die Telekommunikations-Chipkarte übermittelt, welche über eine entsprechende Schnittstelle und Programminstruktionen 304 zum Empfang und zur Auswertung der technischen SMS verfügt. Die empfangene SMS beinhaltet den Befehl zum Aufbau eines ersten Datenkommunikations-Kanas zu dem Server-Computersystem 306 durch das erste Modul 305.

Im Schritt 264 wird die Ausführung der Instruktionen des ersten Moduls durch den Prozessor 111 der Telekommunikations-Chipkarte 300 initialisiert.

Durch die Interaktion des ersten Moduls mit einem auf dem Server-Computersystem befindlichen zweiten Moduls und durch Protokollumsetzung durch das zweite Modul wird die geschützte Verbindung zwischen dem ID-Token und dem ID-Provider-Computersystem im Schritt 266 aufgebaut. Über die geschützte Verbindung kann das ID-Provider-Computersystem 136 die in der ersten Anfrage spezifizierten Attribute aus dem geschützten Speicherbereich des ID-Tokens 106 auslesen. Der Aufbau der geschützten Verbindung erfolgt in den folgenden Teilschritten:
Im Teilschritt 268 wird ein erster Datenkommunikations-Kanal aufgebaut. Der Aufbau wird initialisiert durch das erste Modul, dessen Ausführung wiederum durch den Empfang der Nachricht von dem OTA-Server initialisiert wurde. Der Aufbau des ersten Datenkommunikations-Kanals erfordert die Interaktion des ersten mit dem zweiten Modul.

Im Teilschritt 270 erfolgt der Aufbau eines zweiten Datenkommunikations-Kanals zwischen dem Server-Computersystem 306 und dem ID-Provider-Computersystem 136. Der Aufbau diese Verbindung wird dabei durch die Ausführung des zweiten Moduls initialisiert.

Im Teilschritt 272 erfolgt der Aufbau eines dritten Datenkommunikations-Kanals zwischen der Telekommunikations-Chipkarte 300 und dem ID-Token 106. Der Aufbau des dritten Kanals wird durch das erste Modul initialisiert.

Im Teilschritt 274 erfolgt die Protokollumsetzung durch das zweite Modul, wodurch basierend auf den 3 physikalischen Datenkommunikation-Kanälen mit jeweils eigenen, je nach Ausführungsform gleichen oder unterschiedlichen Datenübertragungsprotokollen und Schnittstellen, eine geschützte Verbindung erzeugt wird.
Als Resultat der erfolgreichen Ausführung der Schritte 250-266 inklusive der Teilschritte 268-274 wird also eine geschützte Verbindung 172 zwischen ID-Provider-Computersystem und ID-Token aufgebaut.

Figur 4 zeigt ein UML-Diagramm eines erfindungsgemäßen Verfahrens. Zunächst wird von einem Nutzer-Computersystem 100 eine Dienstanforderung 164 ein einen Dienst-Computersystem 150 übermittelt. Die Dienstanforderung kann zum Beispiel mittels eines HTTP-Requests von einem auf dem Nutzer-Computersystem installierten Browser an einen auf den Dienst-Computer bereitgestellten Dienst gesendet werden. Die Dienst-Anforderung enthält zumindest einen Identifikator, zum Beispiel eine vollständige Mobilfunkrufnummer, der für eine den Nutzer 102 zugeordnete Telekommunikations-Chipkarte eindeutig ist.

Das Dienst-Computersystem 150 spezifiziert nach Erhalt der Dienst-Anforderung eine erste Anfrage 166 und sendet diese an ein ID-Provider-Computersystem 136. Die erste Anfrage beinhaltet zumindest den Identifikator sowie ein oder mehrere Attribute, die aus einem dem Nutzer 102 zugeordneten ID-Token durch das ID-Provider-Computersystem 136 ausgelesen werden sollen. Nach Erhalt der ersten Anfrage 166 sendet das ID-Provider-Computersystem 136 eine zweite Anfrage 311 an eine MNP-Datenbank 310. Die zweite Anfrage beinhaltet zumindest den Identifikator der Teiekommunikations-Chipkarte 300. Die MNP-Datenbank ermittelt nach Erhalt der zweiten Anfrage den Mobilfunknetz-Provider, welcher aktuell für die Wartung und Abrechnung der über die Telekommunikations-Chipkarte 300 erfolgten Telekommunikations-Dienstleistungen zuständig ist. Der ermittelte Mobilfunknetz-Provider wird dem ID-Provider-Computersystem in einer Nachricht 312 mitgeteilt.

Das ID-Provider-Computersystem sendet im nächsten Schritt an den OTA-Server des ermittelten Mobilfunknetz-Providers eine "Auslese-Anfrage" oder "dritte Anfrage" 313. Die dritte Anfrage beinhaltet nach Ausführungsformen der Erfindung zumindest den Identifikator der Telekommunikations-Chipkarte 300. Der OTA-Server 309 sendet nach Empfang der dritten Anfrage eine Trigger-SMS 314 an die Telekommunikations-Chipkarte 300, welche einen Befehl zum Aufbau eines ersten Datenübertragungs-Kanals des durch ein erstes Modul der Telekommunikations-Chipkarte 300 beinhaltet. Die Telekommunikations-Chipkarte initialisiert mittels des ersten Moduls den Aufbau 315 des ersten Datenkommunikations-Kanals zwischen der Telekommunikations-Chipkarte und dem Server-Computersystem 306. Für den Aufbau des ersten Datenkommunikations-Kanals ist nach Ausführungsformen der Erfindung auch die Ausführung von Instruktionen eines zweiten Moduls auf dem Server-Computersystem 306 erforderlich.

Nach Aufbau des ersten Datenkommunikations-Kanals initialisiert das zweite Modul auf dem Server-Computersystem 306 den Aufbau 316 eines zweiten Datenkommunikations-Kanals zu den ID-Provider-Computersystem 136. Gemäß bevorzugter Ausführungsformen der Erfindung wurden Adressierungsstaaten des ID-Provider-Computersystems 136, zum Beispiel eine IP-Nummer und ggf. auch ein Session-Key mittels der dritten Anfrage 313, der Trigger-SMS 314 sowie einer Datenübertragung von der Telekommunikations-Chipkarte an das Server-Computersystem über den ersten Datenkommunikations-Kanal von dem ID-Provider-Computersystem an das Server-Computersystem 306 übermittelt. Das Server-Computersystem ist also in der Lage, dass anfragende ID-Provider-Computersystem zu identifizieren und zu adressieren.

Schließlich wird der dritte Datenkommunikations-Kanal 317 zwischen der Telekommunikations-Chipkarte 300 und dem ID-Token 106 aufgebaut. Nach Ausführungsformen der Erfindung ist zum Aufbau des dritten Datenkommunikations-Kanals die Ausführung der Instruktionen des ersten Moduls notwendig. Der dritte Kanal kann, je nach Ausführungsform der Erfindung, vor oder nach dem Aufbau des ersten Datenkommunikations-Kanals 315 erfolgen.

Nachdem sich noch der Nutzer 102 erfolgreich bei dem ID-Token 106 authentifiziert hat (in Figur 4 nicht dargestellt), kann eine geschützte Verbindung 172 zwischen dem ID-Token und dem ID-Provider-Computersystem 136 aufgebaut werden. Über diese geschützte Verbindung 172 kann das zumindest eine in der ersten Anfrage 166 spezifizierten Attribut aus dem geschützten Speicherbereich des ID-Tokens 106 ausgelesenen und anders ID-Token Strichprovider-Computersystem 136 übermittelt werden (Übermittlung der Attribute-318). Die übermittelten Attribute können nun gegebenenfalls doch das ID-Provider-Computersystem signiert und an das anfragende Dienst-Computersystem 150 weitergeleitet werden.

Gemäß weiteren Ausführungsformen kann anstatt des zweiten Datenkommunikations-Kanals 316 auch ein vierter Datenkommunikations-Kanal 320 zwischen der Telekommunikations-Chipkarte 300 und dem ID-Provider-Computersystem 136 aufgebaut werden. Eine entsprechende Anpassung der Computer-implementierten Instruktionen des zweiten Moduls zur Protokollumsetzung vorausgesetzt, können auch diese Ausführungsformen den Aufbau einer geschützten Verbindung zwischen dem ID-Token 106 und dem ID-Provider-Computersystem 136 bewirken.

### Bezugszeichenliste

- 100: Nutzer-Computersystem
- 101: Mobilfunkgerät
- 102: Nutzer
- 104: Schnittstelle
- 105: Schnittstelle
- 106: ID-Token
- 108: Schnittstelle
- 110: Prozessor
- 111: Prozessor
- 113: Programminstruktionen
- 114: Netzwerk-Schnittstelle
- 115: Mobilfunk-Schnittstelle
- 116: Netzwerk
- 118: elektronischer Speicher
- 120: geschützter Speicherbereich
- 122: geschützter Speicherbereich
- 124: geschützter Speicherbereich
- 126: Speicherbereich
- 128: Prozessor
- 130: Programminstruktionen
- 132: Programminstruktionen
- 134: Programminstruktionen
- 136: ID-Provider-Computersystem
- 138: Netzwerk-Schnittstelle
- 140: Speicher
- 142: privater Schlüssel
- 144: Zertifikat
- 145: Prozessor
- 146: Programminstruktionen
- 148: Programminstruktionen
- 150: Dienst-Computersystem
- 152: Netzwerk-Schnittstelle
- 154: Prozessor
- 156: Programminstruktionen
- 164: Dienst-Anforderung
- 166: erste Anfrage
- 172: geschützte Verbindung
- 207-274: Schritte
- 300: Telekommunikations-Chipkarte
- 301: Speicher
- 302: Mobilfunk PIN
- 303: Programminstruktionen
- 304: Programminstruktionen
- 305: Programminstruktionen
- 306: Server-Computersystem
- 307: Prozessor
- 308: zweites Modul
- 309: OTA-Server
- 310: MNP-Datenbank
- 311: "zweite" oder MNP- Anfrage
- 312: erste Antwort
- 313: "dritte" oder Auslese-Anfrage
- 314: Trigger-SMS
- 315: Aufbau erster Datenkommunikations-Kanal
- 316: Aufbau zweiter Datenkommunikations-Kanal
- 317: Aufbau dritter Datenkommunikations-Kanal
- 318: auslesen Attribut(e) über geschützte Verbindung 172
- 319: Übermittlung Attribut(e) in einer Antwort
- 320: Aufbau vierter Datenübertragungs-Kanal

## Patentansprüche

1. Verfahren zum Lesen zumindest eines in einem ID-Token (106) gespeicherten Attributs, wobei das ID-Token einem Nutzer (102) zugeordnet ist, mit folgenden Schritten:
- Authentifizierung (207) des Nutzers (102), weichem eine Telekommunikations-Chipkarte (300) mit zumindest einem Identifikator zugeordnet ist, gegenüber dem ID-Token,
- Aufbau (208) einer geschützten Verbindung (172) zwischen dem ID-Token und einem ersten Computersystem (136) über eine Mobilfunkverbindung, wobei der Aufbau der geschützten Verbindung durch eine Interaktion der Telekommunikations-Chipkarte (300) mit einem Server-Computersystem (306) bewirkt wird, wobei die geschützte Verbindung (172) eine Ende-zu-Ende-Verschlüsselung zwischen dem ID-Token und dem ersten Computersystem aufweist,
- Authentifizierung (210) des ersten Computersystems (136) gegenüber dem ID-Token über die geschützte Verbindung, und
- nach erfolgreicher Authentifizierung des Nutzers und des ersten Computersystems gegenüber dem ID-Token, Lesezugriff (212) des ersten Computersystems auf das zumindest eine in dem ID-Token gespeicherte Attribut zur Übertragung des zumindest einen Attributs über ein Netzwerk (116), wobei vorzugsweise das zumindest eine aus dem ID-Token durch das erste Computersystem gelesene Attribut von dem ersten Computersystem an das Nutzer-Computersystem (100) gesendet wird.

2. Verfahren nach Anspruch 1, wobei die Interaktion der Telekommunikations-Chipkarte (300) mit einem Server-Computersystem (306) durch eine Interaktion eines ersten Moduls (305) mit einem zweiten Modul (308) bewirkt wird, wobei das erste und zweite Modul miteinander interoperabel sind, wobei das erste Modul auf der Telekommunikations-Chipkarte ausgeführt wird, wobei das zweite Modul auf dem Server-Computersystem ausgeführt wird,
- wobei vorzugsweise die Authentifizierung des ersten Computersystems gegenüber dem ID-Token mit Hilfe eines Zertifikats (144) des ersten Computersystems erfolgt, wobei das Zertifikat eine Angabe derjenigen in dem ID-Token gespeicherten Attribute beinhaltet, für welche das erste Computersystem für den Lesezugriff berechtigt ist, und/oder
- wobei vorzugsweise das ID-Token die Leseberechtigung des ersten Computersystems für den Lesezugriff auf zumindest eines der Attribute mit Hilfe des Zertifikats überprüft,
- wobei das Verfahren insbesondere die folgenden weiteren Schritte aufweist:
∘ Signierung (214) des zumindest einen aus dem ID-Token gelesenen Attributs durch das erste Computersystem,
∘ Übertragung (216) des signierten Attributs von dem ersten Computersystem an ein zweites Computersystem (150).

3. Verfahren nach Anspruch 2, mit folgenden weiteren Schritten:
- Aufbau (268, 315) eines ersten Datenübertragungs-Kanals zwischen der Telekommunikations-Chipkarte (300) und dem Server-Computersystem (306),
- Aufbau (270, 316) eines zweitem Datenübertragungs-Kanals zwischen dem Server-Computersystem und dem ersten Computersystem (136),
- Aufbau (272, 317) eines dritten Datenübertragungs-Kanals zwischen der Telekommunikations-Chipkarte (300) und dem ID-Token (106),
- Protokollumsetzung (274) der zur Datenübertragung auf dem ersten, zweiten und dritten Datenübertragungs-Kanal verwendeten Protokolle zum Aufbau einer geschützten Verbindung (172) zwischen dem ID-Token und dem ersten Computersystem, wobei die Protokollumsetzung vorzugsweise durch das zweite Modul ausgeführt wird.

4. Verfahren nach einem der Ansprüche 1-3, wobei die Interaktion des ersten und zweiten Moduls zum Aufbau der geschützten Verbindung durch einen Benutzerzugriff auf das zweite Computersystem initiiert wird mit den folgenden Schritten:
- Dienst-Anforderung (250) eines Nutzer-Computersystems (100) an das zweite Computersystem (150), wobei der Zugriff einen Identifikator der Telekommunikations-Chipkarte (300) beinhaltet,
- Senden (254) einer ersten Anfrage durch das zweite Computersystem an das erste Computersystem, wobei die Anfrage mindestens den Identifikator der Telekommunikations-Chipkarte sowie eine Attributspezifizierung zum Lesen eines oder mehrerer Attribute aus dem ID-Token beinhaltet,
wobei der Lesezugriff des ersten Computersystems erfolgt, um die in der Attributspezifizierung spezifizierten ein oder mehreren Attribute aus dem ID-Token auszulesen.

5. Verfahren nach Anspruch 3, wobei nach dem Senden der ersten Anfrage die folgenden Schritte ausgeführt werden:
- Senden (256) einer zweiten Anfrage (311) von dem ersten Computersystem an eine MNP-Datenbank (310), wobei die zweite Anfrage zumindest den Identifikator der Telekommunikations-Chipkarte beinhaltet,
- Senden (258) einer ersten Antwort (312) von der MNP-Datenbank an das erste Computersystem, wobei die erste Antwort den zu der Telekommunikations-Chipkarte (300) gehörenden Mobilfunknetz-Provider spezifiziert,
- Senden (260) einer dritten Anfrage (313) an einen OTA-Server des spezifizierten Mobilfunknetz-Providers durch das erste Computersystem, wobei die dritte Anfrage zumindest den Identifikator der Telekommunikations-Chipkarte beinhaltet,
- Verarbeitung (262) der dritten Anfrage durch den OTA-Server und Versenden einer Nachricht (314) an die Telekommunikations-Chipkarte,
- Empfang (264) der Nachricht durch das erste Modul der Telekommunikations-Chipkarte, wobei das erste Modul nach Verarbeitung der Nachricht den Aufbau der geschützten Verbindung (172) initialisiert.

6. Verfahren nach Anspruch 2 mit den folgenden Schritten:
- Aufbau (268, 315) eines ersten Datenübertragungs-Kanals zwischen der Telekommunikations-Chipkarte (300) und dem Server-Computersystem (306),
- Aufbau (320) eines vierten Datenübertragungs-Kanals zwischen der Telekommunikations-Chipkarte (300) und dem ersten Computersystem (316),
- Aufbau (272, 317) eines dritten Datenübertragungs-Kanals zwischen der Telekommunikations-Chipkarte (300) und dem ID-Token (106),
- Protokollumsetzung (274) der zur Datenübertragung auf dem ersten, vierten und dritten Datenübertragungs-Kanal verwendeten Protokolle zum Aufbau einer geschützten Verbindung (172) zwischen dem ID-Token und dem ersten Computersystem.

7. ID-Token (106) mit
- einem geschützten Speicherbereich (124) zur Speicherung von zumindest einem Attribut,
- Mitteln (120) zur Authentifizierung eines dem ID-Token zugeordneten Nutzers (102) gegenüber dem ID-Token,
- Mitteln (134) zur Authentifizierung eines ersten Computersystems (136) gegenüber dem ID-Token,
- Mitteln (108) zum Aufbau (317) eines Datenkommunikations-Kanals zwischen dem ID-Token und einer Telekommunikations-Chipkarte (300),
und
- Mitteln (132) zum Aufbau einer geschützten Verbindung (172) von dem ID-Token über die Telekommunikations-Chipkarte zu dem ersten Computersystem, über die das erste Computersystem das zumindest eine Attribut auslesen kann, wobei eine notwendige Voraussetzung für das Auslesen des zumindest einen Attributs aus dem ID-Token durch das erste Computersystem die erfolgreiche Authentifizierung des Nutzers und des ersten Computersystems gegenüber dem ID-Token ist, wobei es sich bei dem ID-Token insbesondere um ein elektronisches Gerät, insbesondere einen USB-Stick, oder ein Dokument, insbesondere ein Wert- oder Sicherheitsdokument, handelt und/oderwobei der ID-Token insbesondere mit Mitteln (132) zur Ende-zu-Ende-Verschlüsselung der Verbindung für eine geschützte Übertragung des zumindest einen Attributes zu dem ersten Computersystem ausgestattet ist.

8. Telekommunikations-Chipkarte (300), der mindestens ein die Telekommunikations-Chipkarte eindeutig identifizierender Identifikator zugeordnet ist, mit
- einem computer-lesbaren, nicht flüchtigen Speichermedium (301),
- einem Prozessor (111),
- einer Schnittstelle (104) zum Empfang einer Nachricht von einem OTA-Server (309),
- einer ersten Schnittstelle (115) zum Aufbau (315) eines ersten Datenkommunikations-Kanals mit einem Server-Computersystem (306), wobei der erste Datenübertragungs-Kanal insbesondere auf dem TCP/IP Protokoll beruht,
- einer dritten Schnittstelle (105) zum Aufbau (317) eines dritten Datenkommunikations-Kanals mit einem ID-Token (106), wobei der dritte Datenkommunikations-Kanal insbesondere auf dem PACE-Protokoll beruht,
- computer-interpretierbare Instruktionen eines ersten Moduls (305) zum Aufbau einer geschützten Verbindung (172) zwischen dem ID-Token (106) und einem ID-Provider-Computersystem (136) in Zusammenarbeit mit einem zweiten Modul (308) auf dem Server-Computersystem (306),
- wobei die Telekommunikations-Chipkarte insbesondere zusätzlich mit einer Schnittstelle zum Empfang optischer Daten von dem ID-Token ausgestattet ist, wobei es sich bei den optischen Daten insbesondere um eine Token-Zugriffsnummer, insbesondere eine CAN, handelt.

9. Telekommunikations-Chipkarte nach Anspruch 8, wobei der Aufbau der geschützten Verbindung durch den Erhalt einer Nachricht von dem OTA-Server (309) initiiert wird, und wobei durch das zweite Modul eine Protokollumsetzung zum Aufbau der geschützten Verbindung und zum Auslesen von dem zumindest einem Attribut des ID-Tokens durch das erste Computersystem bewirkt wird.

10. Mobilfunkgerät mit einer Telekommunikations-Chipkarte (300) nach einem der Ansprüche 8-9.

11. Computersystem (136) mit
- einem Prozessor (145),
- einem computer-lesbaren, nicht flüchtigen Speichermedium (140),
- Mitteln (138) zum Empfang einer ersten Nachricht von einem zweiten Computersystem (150), die mindestens einen Identifikator einer Telekommunikations-Chipkarte (300) beinhaltet, wobei die Telekommunikations-Chipkarte (300) einem Nutzer (102) zugeordnet ist, wobei die erste Anfrage zumindest ein Attribut spezifiziert, welches von einem dem Nutzer zugeordneten ID-Token (106) von dem Computersystem (136) ausgelesen werden soll, über ein Netzwerk (116),
- Mitteln (142, 144, 146) zur Authentifizierung gegenüber dem ID-Token (106) über eine geschützte Verbindung (172),
- Mitteln (138, 145) zum Lesen des zumindest einen spezifizierten Attributs aus dem ID-Token über eine geschützte Verbindung (172),
wobei der Aufbau der geschützten Verbindung (172) mit Hilfe der durch den identifikator spezifizierten Telekommunikations-Chipkarte (300) hergestellt wird, und wobei das Lesen des zumindest einen Attributs über die geschützte Verbindung voraussetzt, dass sich ein dem ID-Token zugeordneter Nutzer (102) und das Computersystem gegenüber dem ID-Token authentifiziert haben,
wobei das Computersystem insbesondere ferner mit Mitteln (144) zum Signieren des zumindest einen Attributs und/oder der Kennung ausgestattet ist, wobei das signierte Attribut und/oder die signierte Kennung gesendet werden, und/oder
wobei das Computersystem insbesondere ferner mit Mitteln zum Senden einer zweiten Anfrage an eine MNP-Datenbank (310) zur Ermittlung des Mobilfunknetzwerk-Providers, welcher der Telekommunikations-Chipkarte zugeordnet ist, ausgestattet ist,
mit
- Mitteln zum Senden einer dritten Anfrage an einen OTA-Server (309) der Telekommunikations-Chipkarte, der dem ermittelten Mobilfunknetz-Provider zugehörig ist, wobei die dritte Anfrage den OTA-Server zum Senden einer technischen Nachricht an die Telekommunikations-Chipkarte (300) veranlasst und wobei die Nachricht auf der Telekommunikations-Chipkarte die Ausführung eines ersten Moduls (305) zum Aufbau der geschützten Verbindung (172) veranlasst.

12. Computersystem (136) nach einem der Ansprüche 10-11, wobei das Computersystem in seinem computer-lesbaren, nicht flüchtigen Speichermedium mehrere Zertifikate mit unterschiedlichen Leserechten aufweist, wobei das Computersystem aufgrund des Empfangs der ersten Anfrage zumindest eines der Zertifikate auswählt, welches die zum Lesen der in der ersten Anfrage spezifizierten Attribute ausreichenden Leserechte aufweist.

13. Server-Computersystem (306), mit
- einem Prozessor (307),
- einem computer-lesbaren, nicht flüchtigen Speichermedium,
- Mitteln zum Aufbau (315) eines ersten Datenkommunikations-Kanals zu einer Telekommunikations-Chipkarte (300) nach einem der Ansprüche 8-9,
- Mitteln zum Aufbau (316) eines zweiten Datenkommunikations-Kanals mit einem ersten Computersystem (136) nach einem der Ansprüche 11-12,
- einem zweiten Modul (308) mit Computer-interpretierbaren Instruktionen zum Aufbau einer geschützten Verbindung (172) zwischen einem ID-Token (106) und dem ersten Computersystem, wobei das zweite Modul mit einem ersten Modul (305) der Telekommunikations-Chipkarte interoperabel ist, wobei das erste Modul die Ausführung des zweiten Moduls initiiert und wobei das zweite Modul durch Protokollumsetzung die geschützte Verbindung zum Auslesen von zumindest einem Attribut des ID-Tokens durch das erste Computersystem aufbaut.

14. Computerprogrammprodukt mit ausführbaren Programminstruktionen zur Ausführung des Verfahrens gemäß einem der Ansprüche 1-6.

## Claims

1. A method for reading at least one attribute stored in an ID token (106), wherein the ID token is assigned to a user (102), said method having the following steps:
- authenticating (207) the user (102), to whom a telecommunications chip card (300) having at least one identifier is assigned, to the ID token,
- establishing (208) a protected link (172) between the ID token and a first computer system (136) via a mobile communications link, wherein the protected link is established by an interaction of the telecommunications chip card (300) with a server-computer system (306), wherein the protected link (172) comprises end-to-end encryption between the ID token and the first computer system,
- authenticating (210) the first computer system (136) to the ID token via the protected link, and
- following successful authentication of the user and the first computer system to the ID token, granting read access (212) of the first computer system to the at least one attribute stored in the ID token in order to transmit the at least one attribute via a network (116), wherein the at least one attribute read from the ID token by the first computer system is preferably sent from the first computer system to the user computer system (100).

2. The method according to claim 1, wherein the interaction of the telecommunications chip card (300) with a server-computer system (306) is implemented by an interaction of a first module (305) with a second module (308), wherein the first and second module are interoperable with one another, wherein the first module is executed on the telecommunications chip card, wherein the second module is executed on the server-computer system,
- wherein the first computer system is preferably authenticated to the ID token with the aid of a certificate (144) of the first computer system, wherein the certificate contains a specification of those attributes stored in the ID token for which the first computer system is authorised for read access, and/or
- wherein the ID token preferably checks the read authorisation of the first computer system for read access to at least one of the attributes with the aid of the certificate,
- wherein the method in particular comprises the following further steps:
∘ signing (214) the at least one attribute read from the ID token by the first computer system,
∘ transmitting (216) the signed attribute from the first computer system to a second computer system (150).

3. The method according to claim 2, having the following further steps:
- establishing (268, 315) a first data transmission channel between the telecommunications chip card (300) and the server-computer system (306),
- establishing (270, 316) a second data transmission channel between the server-computer system and the first computer system (136),
- establishing (272, 317) a third data transmission channel between the telecommunications chip card (300) and the ID token (106),
- implementing (274) the protocol used for data transmission over the first, second and third data transmission channel in order to establish a protected link (172) between the ID token and the first computer system, wherein the protocol implementation is executed preferably by the second module.

4. The method according to any one of claims 1 to 3, wherein the interaction of the first and second module for establishment of the protected link is initiated by user access to the second computer system, with the following steps:
- requesting a service (250) from a user computer system (100) to the second computer system (150), wherein the access contains an identifier of the telecommunications chip card (300),
- sending (254) a first query by the second computer system to the first computer system, wherein the query contains at least the identifier of the telecommunications chip card and an attribute specification for reading one or more attributes from the ID token,
wherein read access of the first computer system is granted in order to read out the one or more attributes specified in the attribute specification from the ID token.

5. The method according to claim 3, wherein, once the first query has been sent, the following steps are executed:
- sending (256) a second query (311) from the first computer system to an MNP database (310), wherein the second query contains at least the identifier of the telecommunications chip card,
- sending (258) a first response (312) from the MNP database to the first computer system, wherein the first response specifies the mobile communications network provider belonging to the telecommunications chip card (300),
- sending (260) a third query (313) to an OTA server of the specified mobile communications network provider by the first computer system, wherein the third query contains at least the identifier of the telecommunications chip card,
- processing (262) the third query by the OTA server and sending a message (314) to the telecommunications chip card,
- receiving (264) the message by the first module of the telecommunications chip card, wherein the first module initialises the establishment of the protected link (172) following processing of the message.

6. The method according to claim 2, having the following steps:
- establishing (268, 315) a first data transmission channel between the telecommunications chip card (300) and the server-computer system (306),
- establishing (320) a fourth data transmission channel between the telecommunications chip card (300) and the first computer system (316),
- establishing (272, 317) a third data transmission channel between the telecommunications chip card (300) and the ID token (106),
- implementing (274) the protocol used for data transmission over the first, fourth and third data transmission channel in order to establish a protected link (172) between the ID token and the first computer system.

7. An ID token (106) comprising
- a protected memory area (124) for storing at least one attribute,
- means (120) for authenticating a user (102), assigned to the ID token, to the ID token,
- means (134) for authenticating a first computer system (136) to the ID token,
- means (108) for establishing (317) a data communication channel between the ID token and a telecommunications chip card (300),
and
- means (132) for establishing a protected link (172) from the ID token via the telecommunications chip card to the first computer system, via which the first computer system can read out the at least one attribute, wherein a necessary precondition for the readout of the at least one attribute from the ID token by the first computer system is the successful authentication of the user and of the first computer system to the ID token,
wherein the ID token is in particular an electronic device, in particular a USB stick, or a document, in particular a value or security document, and/or wherein the ID token is equipped in particular with means (132) for end-to-end encryption of the link for protected transmission of the at least one attribute to the first computer system.

8. A telecommunications chip card (300), to which at least one identifier uniquely identifying the telecommunications chip card is assigned, comprising
- a computer-readable, non-volatile storage medium (301),
- a processor (111),
- an interface (104) for receiving a message from an OTA server (309),
- a first interface (115) for establishing (315) a first data communication channel with a server-computer system (306), wherein the first data transmission channel is based in particular on the TCP/IP protocol,
- a third interface (105) for establishing (317) a third data communication channel with an ID token (106), wherein the third data communication channel is based in particular on the PACE protocol,
- computer-interpretable instructions of a first module (305) for establishing a protected link (172) between the ID token (106) and an ID provider computer system (136) in cooperation with a second module (308) on the server-computer system (306),
- wherein the telecommunications chip card is in particular equipped additionally with an interface for receiving optical data from the ID token, wherein the optical data is in particular a token access number, in particular a CAN.

9. The telecommunications chip card according to claim 8, wherein the establishment of the protected link is initiated by the receipt of a message from the OTA server (309), and wherein implementation of a protocol for establishment of the protected link and for readout of the at least one attribute of the ID token by the first computer system is brought about by the second module.

10. A mobile communications device comprising a telecommunications chip card (300) according to either one of claims 8 or 9.

11. A computer system (136) comprising
- a processor (145),
- a computer-readable, non-volatile storage medium (140),
- means (138) for receiving a first message from a second computer system (150), which message contains at least one identifier of a telecommunications chip card (300), wherein the telecommunications chip card (300) is assigned to a user (102), wherein the first query specifies at least one attribute, which is to be read out by the computer system (136) from an ID token (106) assigned to the user, via a network (116),
- means (142, 144, 146) for authentication to the ID token (106) via a protected link (172),
- means (138, 145) for reading the at least one specified attribute from the ID token via a protected link (172),
wherein the protected link (172) is established with the aid of the telecommunications chip card (300) specified by the identifier, and wherein the reading of the at least one attribute via the protected link presupposes that a user (102) assigned to the ID token and the computer system have authenticated themselves to the ID token, wherein the computer system in particular is also equipped with means (144) for signing the at least one attribute and/or the identifier,
wherein the signed attribute and/or the signed identifier are sent, and/or
wherein the computer system in particular it is also equipped with means for sending a second query to an MNP database (310) for determining the mobile communications network provider assigned to the telecommunications chip card,
comprising
- means for sending a third query to an OTA server (309) of the telecommunications chip card with which the determined mobile communications network provider is associated, wherein the third query prompts the OTA server to send a technical message to the telecommunications chip card (300), and wherein the message on the telecommunications chip card prompts the execution of a first module (305) in order to establish the protected link (172).

12. The computer system (136) according to either one of claims 10 or 11, wherein the computer system, in its computer-readable, non-volatile storage medium, has a plurality of certificates with different read rights, wherein the computer system selects at least one of the certificates on the basis of the receipt of the first query, which at least one of the certificates has sufficient read rights for reading the attributes specified in the first query.

13. A server-computer system (306), comprising
- a processor (145),
- a computer-readable, non-volatile storage medium,
- means for establishing (315) a first data communication channel to a telecommunications chip card (300) according to either one of claims 8 or 9,
- means for establishing (316) a second data communication channel with a first computer system (136) according to either one of claims 11 or 12,
- a second module (308) with computer-interpretable instructions for establishing a protected link (172) between an ID token (106) and the first computer system, wherein the second module is interoperable with a first module (305) of the telecommunications chip card, wherein the first module initiates the execution of the second module, and wherein the second module, by implementing a protocol, establishes the protected link for the readout of at least one attribute of the ID token by the first computer system.

14. A computer program product with executable program instructions for executing the method according to any one of claims 1 to 6.

## Revendications

1. Procédé de lecture d'au moins un attribut stocké dans un jeton d'identification (106), où le jeton d'identification est associé à un utilisateur (102) avec les étapes suivantes :
- d'authentification (207) de l'utilisateur (102), auquel est associée une carte à puce de télécommunication (300) avec au moins un identificateur, vis-à-vis du jeton d'identification,
- d'établissement (208) d'une connexion sécurisée (172) entre le jeton d'identification et un premier système informatique (136) par le biais d'une connexion radio mobile, où l'établissement de la connexion sécurisée est activé par une interaction de la carte à puce de télécommunications (300) avec un système informatique serveur (306), où la connexion sécurisée (172) présente un chiffrement de bout en bout entre le jeton d'identification et le premier système informatique,
- d'authentification (210) du premier système informatique (136) vis-à-vis du jeton d'identification par le biais de la connexion sécurisée, et
- après une authentification réussie de l'utilisateur et du premier système informatique vis-à-vis du jeton d'identification, d'accès en lecture (212) du premier système informatique pour au moins un attribut stocké dans le jeton d'identification pour la transmission de l'au moins un attribut par le biais d'un réseau (116), où, de préférence, l'au moins un attribut lu à partir du jeton d'identification par le premier système informatique est envoyé du premier système informatique vers le système informatique d'utilisateur (100).

2. Procédé selon la revendication 1, dans lequel l'interaction de la carte à puce de télécommunication (300) avec un système informatique serveur (306) est activée par une interaction d'un premier module (305) avec un deuxième module (308), où le premier et le deuxième module sont interopérables entre eux, où le premier module est exécuté sur la carte à puce de télécommunication, où le deuxième module est exécuté sur le système informatique serveur,
- où l'authentification du premier système informatique vis-à vis du jeton d'identification a lieu de préférence à l'aide d'un certificat (144) du premier système informatique, où le certificat contient une indication des attributs stockés dans le jeton d'identification pour lesquels le premier système informatique est habilité pour l'accès en lecture, et/ou
- où le jeton d'identification vérifie de préférence l'habilitation de l'accès en lecture du premier système informatique pour au moins un des attributs à l'aide du certificat,
- où le procédé présente en particulier les autres étapes suivantes :
∘ de signature (214) de l'au moins un attribut lu à partir du jeton d'identification par le système informatique,
∘ de transmission (216) de l'attribut signé du premier système informatique vers un deuxième système informatique (150).

3. Procédé selon la revendication 2, avec les autres étapes suivantes :
- d'établissement (268, 315) d'une première voie de transmission de données entre la carte à puce de télécommunication (300) et le système informatique serveur (306),
- d'établissement (270, 316) d'une deuxième voie de transmission de données entre le système informatique serveur et le premier système informatique (136),
- d'établissement (272, 317) d'une troisième voie de transmission de données entre la carte à puce de télécommunication (300) et le jeton d'identification (106),
- de mise en oeuvre d'un protocole (274) des protocoles employés pour la transmission de données sur les première, deuxième et troisième voies de transmission de données pour l'établissement d'une connexion (172) sécurisée entre le jeton d'identification et le premier système informatique, où la mise en oeuvre de protocole est effectuée de préférence par le deuxième module.

4. Procédé selon l'une des revendications 1 à 3, dans lequel l'interaction du premier et du deuxième module pour l'établissement de la connexion sécurisée est initié par un accès d'utilisateur sur le deuxième système informatique avec les étapes suivantes :
- de demande de services (250) d'un système informatique d'utilisateur (100) au deuxième système informatique (150), où l'accès contient un identificateur de la carte à puce de télécommunication (300),
- d'envoi (254) d'une première demande par le deuxième système informatique au premier système informatique, où la demande contient au moins l'identificateur de la carte à puce de télécommunication ainsi qu'une spécification d'attribut pour la lecture d'un ou de plusieurs attributs à partir du jeton d'identification,
où l'accès en lecture du premier système informatique a lieu afin de lire le ou les attributs spécifiés dans la spécification d'attributs à partir du jeton d'identification.

5. Procédé selon la revendication 3, où, après l'envoi de la première demande, les étapes suivantes sont exécutées :
- l'envoi (256) d'une deuxième demande (311) du premier système informatique vers une banque de données MNP (310), où la deuxième demande contient au moins l'identificateur de la carte à puce de télécommunication,
- l'envoi (258) d'une première réponse (312) de la banque de données MNP au premier système informatique, où la première réponse spécifie le fournisseur de réseau mobile correspondant à la carte à puce de télécommunication (300),
- l'envoi (260) d'une troisième demande (313) à un serveur OTA du fournisseur de réseau mobile spécifié par le premier système informatique, où la troisième demande contient au moins l'identificateur de la carte à puce de télécommunication,
- le traitement (262) de la troisième demande par le serveur OTA et l'envoi d'une information (314) à la carte à puce de télécommunication,
- la réception (264) de l'information par le premier module de la carte à puce de télécommunication, où le premier module initialise l'établissement de la connexion sécurisée (172) après le traitement de l'information.

6. Procédé selon la revendication 2, avec les étapes suivantes :
- d'établissement (268, 315) d'une première voie de transmission de données entre la carte à puce de télécommunication (300) et le système informatique serveur (306),
- d'établissement (320) d'une quatrième voie de transmission de données entre la carte à puce de télécommunication (300) et le premier système informatique (316),
- d'établissement (272, 317) d'une troisième voie de transmission de données entre la carte à puce de télécommunication (300) et le jeton d'identification (106),
- de mise en oeuvre d'un protocole (274) des protocoles employés pour la transmission de données sur les première, quatrième et troisième voies de transmission de données pour l'établissement d'une connexion sécurisée (172) entre le jeton d'identification et le premier système informatique.

7. Jeton d'identification (106) avec
- un premier domaine de mémoire sécurisé (124) pour le stockage d'au moins un attribut,
- des moyens (120) pour l'authentification d'un utilisateur (102) associé au jeton d'identification vis-à-vis du jeton d'identification,
- des moyens (134) pour l'authentification d'un premier système informatique (136) vis-à-vis du jeton d'identification,
- des moyens (108) pour l'établissement (317) d'une voie de transmission de données entre le jeton d'identification et une carte à puce de télécommunication (300),
et
des moyens (132) pour l'établissement d'une connexion sécurisée (172) du jeton d'identification vers le premier système informatique par le biais de la carte à puce de télécommunication, pour pouvoir lire l'au moins un attribut par le biais du premier système informatique, où une condition nécessaire pour la lecture de l'au moins un attribut à partir du jeton d'identification par le premier système informatique est l'authentification réussie de l'utilisateur et du premier système informatique vis-à-vis du jeton d'identification, où, dans le cas du jeton d'utilisation, il s'agit en particulier d'une clé USB, ou d'un document, en particulier, d'un document de valeur ou de sécurité, et/ou où le jeton d'identification est équipé en particulier de moyens (132) pour le chiffrement de bout en bout de la liaison pour une transmission sécurisée de l'au moins un attribut vers le premier système informatique.

8. Carte à puce de télécommunication (300) à laquelle est associé au moins un identificateur identifiant de manière univoque la carte à puce de télécommunication, avec
- un support de stockage (301) non volatil lisible par ordinateur,
- un processeur (111),
- une interface (104) pour la réception d'une information provenant d'un serveur OTA (309),
- une première interface (115) pour l'établissement (315) d'une première voie de communication de données avec un système informatique serveur (306), où la première voie de communication de données repose en particulier sur un protocole TCP/IP,
- une troisième interface (105) pour l'établissement (317) d'une troisième voie de communication de données avec un jeton d'identification (106), où la troisième voie de communication repose en particulier sur un protocole PACE,
- des instructions interprétables par ordinateur d'un premier module (305) pour l'établissement d'une connexion sécurisée (172) entre le jeton d'identification (106) et un système informatique de fournisseur d'identifiant (136) en collaboration avec un deuxième module (308) sur le système informatique serveur (306),
- où la carte à puce de télécommunication est équipée en particulier de manière complémentaire avec une interface pour la réception de données optiques à partir du jeton d'identification, où, dans le cas des données optiques, il s'agit en particulier d'un numéro d'accès au jeton, en particulier, un CAN.

9. Carte à puce de télécommunication selon la revendication 8, dans laquelle l'établissement de la connexion sécurisée est initié par la détention d'une information du serveur OTA (309), et dans laquelle une mise en oeuvre de protocole est provoquée par le deuxième module pour l'établissement de la connexion sécurisée et pour la lecture de l'au moins un attribut du jeton d'identification par le premier système informatique.

10. Appareil de communication mobile avec une carte à puce de télécommunication (300) selon l'une des revendications 8 ou 9.

11. Système informatique (136) avec
- un processeur (145),
- un support de stockage (140) non volatil lisible par ordinateur,
- des moyens (138) pour la réception d'une première information provenant d'un deuxième système informatique (150), qui contient au moins un identificateur d'une carte à puce de télécommunication (300), où la carte à puce de télécommunication (300) est associée à un utilisateur (102), où la première demande spécifie au moins un attribut lequel doit être lu à partir d'un jeton d'identification (106) associé à l'utilisateur par le système informatique (136), par le biais d'un réseau (116),
- des moyens (142, 144, 146) pour l'authentification vis-à-vis du jeton d'identification (106) par le biais d'une connexion sécurisée (172)
- des moyens (138, 145) pour la lecture de l'au moins un attribut spécifié à partir du jeton d'identification par le biais d'une connexion sécurisée (172),
où l'établissement de la connexion sécurisée (172) est mise en oeuvre à l'aide de la carte à puce de télécommunication (300) spécifiée par l'identificateur et où la lecture de l'au moins un attribut par le biais de la connexion sécurisée part du principe qu'un utilisateur (102) associé au jeton d'utilisation et le système informatique se sont authentifiés vis-à-vis du jeton d'identification,
où le système informatique est en outre équipé avec des moyens (144) pour la signature de l'au moins un attribut et/ou de l'identification,
où l'attribut signé et/ou l'identification signée sont envoyés, et/ou où le programme informatique est en outre équipé en particulier avec des moyens pour l'envoi d'une deuxième demande à une banque de données MNP (310) pour la désignation du fournisseur de réseau radio mobile auquel est associée la carte à puce de télécommunication,
avec
- des moyens pour l'envoi d'une troisième demande à un serveur OTA (309) de la carte à puce de télécommunications, qui va avec le fournisseur de réseau radio mobile, où la troisième demande fait que le serveur OTA envoie une information technique vers la carte à puce de télécommunication (300) et où l'information sur la carte à puce de télécommunication fait qu'un premier module (305) établisse la connexion sécurisée (172).

12. Système informatique (136) selon l'une des revendications 10 ou 11, où le système informatique présente plusieurs certificats avec des droits en lecture différents dans son support de stockage non volatil lisible par ordinateur, où le système informatique, en raison de la réception de la première demande, choisit au moins un des certificats, lequel présente des droits de lecture suffisants pour la lecture des attributs spécifiés dans la première demande.

13. Système informatique serveur (306) avec
- un processeur (307),
- un support de stockage non volatil lisible par ordinateur,
- des moyens pour l'établissement (315) d'une première voie de communication de données vers une carte à puce de télécommunication (300) selon l'une des revendications 8 ou 9,
- des moyens pour l'établissement (316) d'une deuxième voie de communication de données avec un premier système informatique (136) selon l'une des revendications 11 ou 12,
- un deuxième module (308) avec des instructions interprétables par ordinateur pour l'établissement d'une connexion sécurisée (172) entre un jeton d'identification (106) et le premier système informatique, où le deuxième module (305) de la carte à puce de télécommunication est interopérable, où le premier module initie l'exécution du deuxième module et où le deuxième module établit la connexion sécurisée par une mise en oeuvre de protocole pour la lecture d'au moins un attribut du jeton d'identification par le premier système informatique.

14. Produit de programme informatique avec des instructions de programme réalisables pour l'exécution du procédé selon l'une des revendications 1 à 6.
